(19) Europäisches Patentamt
European Patent Office
Office européen des brevets

(11) EP 1 945 718 B1

(12) **EUROPEAN PATENT SPECIFICATION**

(45) Date of publication and mention of the grant of the patent:
**20.10.2010 Bulletin 2010/42**

(21) Application number: **06832789.9**

(22) Date of filing: **10.11.2006**

(51) Int Cl.:
***C08L 101/00*** *(2006.01)* ***C08K 3/00*** *(2006.01)*
***C08K 5/00*** *(2006.01)* ***C08L 1/10*** *(2006.01)*
***G02B 5/30*** *(2006.01)* ***G02F 1/13363*** *(2006.01)*

(86) International application number:
**PCT/JP2006/322910**

(87) International publication number:
**WO 2007/055417 (18.05.2007 Gazette 2007/20)**

(54) **COMPOSITION AND FILM FOR LIQUID CRYSTAL DISPLAYS**

ZUSAMMENSETZUNG UND FOLIE FÜR FLÜSSIGKRISTALLANZEIGEN

COMPOSITION ET FILM POUR DISPOSITIF D'AFFICHAGE À CRISTAUX LIQUIDES

(84) Designated Contracting States:
**DE**

(30) Priority: **10.11.2005 JP 2005325726**
**09.05.2006 JP 2006130169**
**22.09.2006 JP 2006257019**

(43) Date of publication of application:
**23.07.2008 Bulletin 2008/30**

(73) Proprietor: **FUJIFILM Corporation**
**Minato-ku**
**Tokyo 106-0031 (JP)**

(72) Inventors:
- **OKAZAKI, Masaki**
**Minami-ashigara-shi**
**Kanagawa 250-0193 (JP)**
- **YASUDA, Takayasu**
**Minami-ashigara-shi**
**Kanagawa 250-0193 (JP)**
- **NISHIKAWA, Naoyuki**
**Haibara-gun**
**Shizuoka 421-0396 (JP)**
- **KAWANO, Tetsuo**
**Minami-ashigara-shi**
**Kanagawa 250-0193 (JP)**

(74) Representative: **HOFFMANN EITLE**
**Patent- und Rechtsanwälte**
**Arabellastrasse 4**
**81925 München (DE)**

(56) References cited:
**WO-A-2006/125736** **JP-A- 2005 037 440**
**JP-A- 2005 070 535** **JP-A- 2005 196 016**
**JP-A- 2005 242 337** **JP-A- 2006 154 760**
**JP-A- 2006 225 513**

- **DATABASE CA [Online] CHEMICAL ABSTRACTS SERVICE, COLUMBUS, OHIO, US; "Coloring agents for resins" XP002546480 retrieved from STN Database accession no. 1982:564038 -& JP 57 073029 A (TOYO SODA MFG. CO., LTD., JAPAN) 7 May 1982 (1982-05-07)**
- **WINNIK F M ET AL: "NEW WATER-DISPERSIBLE SILICA-BASED PIGMENTS: SYNTHESIS AND CHARACTERIZATION" DYES AND PIGMENTS, ELSEVIER APPLIED SCIENCE PUBLISHERS. BARKING, GB, vol. 14, no. 2, 1 January 1990 (1990-01-01), pages 101-112, XP000141185 ISSN: 0143-7208**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 945 718 B1

## Description

BACKGROUND OF THE INVENTION

1. Field of the Invention

The present invention relates to a composition and a film, a polarizing plate protective film, an optical compensation film for a liquid crystal display device useful in the fields of display, opto-electronics and photonics.

2. Related Art

With advancement of an information society, a large number of attempts to employ optical technologies in transmitting, processing and recording information have been made. In this situation, much attention has been focused on liquid crystal materials capable of arbitrarily manipulating light with their various alignment states as an extremely useful material.
Display devices capable of displaying characters and images can be firstly exemplified as an optical device employing liquid crystal. Spatial light modulators, light modulators, optical compensation plates, and non-linear optical materials can be also exemplified. Liquid crystal materials also have unique physical properties other than such an optical property, and they are also expected to be employed in conductive materials, photo-conductive materials, high-strength materials, tribologic materials, electro-rheological fluids and so forth ("Ekisho Binran (A Handbook of Liquid Crystal) ", compiled by Editorial Committee for "A Handbook of Liquid Crystal", published by Maruzen Co., Ltd., 2000)).
Polymer materials have also conventionally been used as extremely useful ones in various industrial fields.
Recently, in the image-displaying technical field, liquid crystal display (LCD) and plasma display panel (PDP), which are called flat panel displays (FPD), have been used more and more widely. In order to reduce the weigh and the production cost of LCDs, thinning and improving liquid crystal cells has been tried. The importance of an optical film such as an optical compensation sheet, to be employed in a LCD, has been grown, and the importance of controlling the optical anisotropy (Re: in-plane retardation value of the film, Rth: in thickness direction retardation value of the film) for obtaining a good performances of the optical film has been also grown.
With demands for higher image quality of LCD, there has been a growing need for a method of arbitrarily controlling a wider range of the optical anisotropy (for example, higher Re and lower Rth).
Responding these demands, some retardation enhancing agents or the like for optical films, for example, those disclosed in European Patent Publication No. 0911656A2 and Japanese Laid-Open Patent Publication No. 2003-344655, have been provided.

SUMMARY OF THE INVENTION

An object of the invention is to provide a composition of which optical anisotropy are arbitrarily controllable, and is useful as a material for various optical materials.
Another object of the invention is to provide a composition, a film made of the composition and a liquid crystal display comprising the film, which are useful in the displaying technical field.
Another object of the invention is to provide a retardation-controlling agent for polymer film.
In one aspect, the present invention provides a composition according to claim 1 comprising, at least, a polymer material and inorganic fine particles having adsorbed thereto molecules having at least one adsorptive group to the inorganic fine particle and a group capable of forming a liquid crystal core.
As embodiments of the present invention, there are provided the composition wherein said adsorbed molecules are liquid crystal molecules, the composition wherein said adsorbed molecules further have a substitutive group exhibiting an affinity for said polymer material; the composition wherein said at least one adsorptive group is a carboxyl group (-COOH) or a salt thereof; the composition wherein said at least one adsorptive group is a phosphonic acid group represented by a formula (1) below or a salt thereof, or a phosphoric monoester group represented by a formula (2) below or a salt thereof:

Formula (1) $-PO_3X_m$

Formula (2) $-OPO_3X_m$

where, each X represents a hydrogen atom or a mono- or divalent organic or inorganic cation, m is an integer of 1 or 2, provided that X is a divalent organic or inorganic cation if m is 1, and that two X's are respectively hydrogen atoms or monovalent organic or inorganic cations if m is 2; the composition wherein said inorganic fine particles are shape-anisotropic fine particles; the composition wherein said inorganic fine particles are birefringent fine particles; the composition wherein said inorganic fine particles are metal oxide fine particles; the composition wherein said inorganic fine particles are strontium carbonate fine particles; the composition wherein said polymer material is a cellulose acylate-base polymer; and the composition wherein said adsorbed molecules are rod-like molecules.

In another aspect, the present invention provides a film formed made of the composition; and a film comprising, at least, a polymer material and inorganic fine particles having adsorbed thereto molecules having at least one adsorptive group to the inorganic fine particle and a group capable of forming a liquid crystal core.

The film may be used as a protect film for a polarizing plate or an optical compensation film in a liquid crystal display employing any mode.

In another aspect, the present invention provides a process for producing an optical film comprising preparing a composition comprising the composition and producing a film made of the composition; and an agent for controlling retardation for polymer film consisting of inorganic fine particles having adsorbed thereto molecules having at least one adsorptive group to the inorganic fine particle and a group capable of forming a core portion of a liquid crystal compound.

According to the invention, it is possible to control optical anisotropy without any difficulty in a larger range compared with previous techniques, by the presence of molecules adsorbed to inorganic fine particles in a polymer material, the molecules having an adsorptive group to inorganic fine particles and a group capable of forming a liquid crystal core, and more preferably further having a substitutive group exhibiting an affinity for the polymer material, and by the utilization of orientation directing effect generated from their anisotropies. In other words, according to the invention, it is possible to provide a composition having optical anisotropy controllable in a wide range. A film exhibiting desired optical characteristics can be readily produced by using the composition of the present invention, and such a film is useful as an optically anisotropic film when applied to display. The present invention can provide also a novel retardation-control agent for polymer film.

PREFERRED EMBODIMENT OF THE INVENTION

The present invention relates to a composition according to claim 1 comprising, at least, a polymer material and inorganic fine particles having adsorbed thereto molecules having at least one adsorptive group to the inorganic fine particle and a group capable of forming a liquid crystal core, and more preferably further having a substitutive group exhibiting an affinity for said polymer material. According to the present invention, optical anisotropy is controlled by the presence of molecules adsorbed to inorganic fine particles in a polymer material, the’molecules having an adsorptive group to inorganic fine particles and a group capable of forming a liquid crystal core, and more preferably further having a substitutive group exhibiting an affinity for the polymer material, and by the utilization of orientation directing effect generated from their anisotropies. As a consequence, the optical anisotropy can be controlled without any difficulty.in a wider range, as compared with a conventional technique typically such as controlling the optical anisotropy by adding an aromatic-ring-containing organic compound or the like (European Patent Publication No. 0911656A2 and Japanese Laid-Open Patent Publication No. 2003-344655, for example).

The composition of the present invention comprises both of an organic compound having predetermined groups and a inorganic material, inorganic fine particles, in a manner that they are integrated with each other, so that the anisotropy generated from the combination thereof can be more distinctive and the refractive index anisotropy and wavelength dispersion of refractive index can be more variable, as compared with that comprising them in a manner that they are contained independently, or in other words, in a manner that inorganic fine particles and an organic compound having predetermined groups but not adsorbed to the inorganic fine particles are contained independently. According to the invention, the refractive index anisotropy and wavelength dispersion of refractive index can be controlled within a desired range by selecting and then combining geometry of the inorganic fine particles, geometry of molecules adsorbed thereto, mode of adsorption, relation of magnitude of refractive index and wavelength dispersion of refractive index of the inorganic fine particles and the molecules adsorbed thereto.

An example of the composition of the present invention is a composition comprising a polymer material and rod-like inorganic fine particles having adsorbed thereto rod-like molecules having predetermined groups. Each of the rod-like molecules preferably adsorbs at the end to the rod lateral of the inorganic fine particle. According to this embodiment, it may be possible to provide a film, having a positive in-plane retardation Re, a positive retardation in thickness-direction Rth and an inverse wavelength dependence in both of Re and Rth, by the use of the composition wherein each of the inorganic fine particles has a refractive index in a direction along with a long axis larger than that in a direction perpendicular to the long axis, the refractive index anisotropy of the inorganic fine particle is sufficiently larger than that of the rod-like molecule, and the inorganic fine particle has a wavelength dispersion of refractive index sufficiently smaller than that of the rod-like molecule adsorbed thereto.

Another example of the composition of the present invention is a composition comprising a polymer material and rod-like inorganic fine particles having adsorbed thereto discotic molecules having predetermined groups. It is preferred that the face of the discotic molecule is adsorbed to the rod-like lateral face of the fine particle. According to

this embodiment, it may be possible to provide a film, having a positive Re, a regular wavelength dependence in Re and an Rth nearly equal to zero.

It may be possible to produce a film having properties required for a C-plate by the use of the composition comprising discotic or tabular inorganic fine particles. Various types of C-plate such as a positive and negative C-plates and a regular and inverse wavelength-dependence C-plates may be produced by selecting geometry of the molecules to be adsorbed to the inorganic fine.particles, and relation of magnitude of refractive index anisotropy of the both. According to this embodiment, it may also be possible to produce a film having a positive Re, a regular wavelength dependence in Re, a negative Rth and an inverse wavelength dependence in Rth, by the utilization of the facial selectivity techniques.

Various materials, which can be employed in preparing the composition of the invention, will be described in detail hereinafter.

[Inorganic fine particles]

The inorganic fine particles, contained the composition of the invention preferably, have a mean particle sizes of a nanometer to micrometer level in general. More specifically, the fine particles preferably have a mean size derived from a circle-equivalent diameter based on projected area of the primary fine particle of 5 to 500 nm, and more preferably 8 to 300 nm. Two or more species of fine particles differing in the particle size distribution and/or geometry may be mixed, wherein the smaller fine particles in this case preferably have a mean particle size of 100 nm or below, and more preferably 75 nm or below. The geometry is anisotropic, and is more preferably has a needle or rod form. The needle- and rod-like fine particles generally have an aspect ratio of 3 to 20, wherein an aspect ratio of 5 to 15 is preferable. It is also allowable to use discotic or planar inorganic fine particles, wherein geometries of which can be expressed in terms of an aspect ratio of 2 to 50, and more preferably 5 to 20.

The composition comprises shape-anisotropic inorganic fine particles, and preferably comprises shape-anisotropic and birefringent inorganic fine particles. For the birefringent inorganic fine particles, the difference in refractive index between along with a long axis (a longest direction of each inorganic fine particle) and a short axis (a shortest direction among the axes perpendicular to the long axis) of each inorganic fine particle is preferably equal to or more than 0.01, more preferably equal to or more than 0.05 and much more preferably equal to or more than 0.1.

Examples of the material of the inorganic materials include, however not to be limited to, simple metals such as gold, silver, platinum, palladium, silicon and germanium; III-V compound semiconductors; metal chalcogenides such as metal oxide, sulfide and selenide and the composition theirof; perovskyte-structured compounds such as strontium titanate, calcium titanate, sodium titanate, barium titanate and potassium niobate; carbonates such as calcium carbonate and strontium carbonate fine particle; phosphates such as lithium tertiary phosphate, potassium dihydrogen phosphate, calcium monohydrogen phosphate, aluminum primary phosphate, sodium phosphinate, potassium pyrophosphate and magnesium pyrophosphate; and metal fluorides such as calcium fluoride and magnesium fluoride.

Preferable examples of the metal chalcogenides include oxides of aluminum, silicon, titanium, tin, zinc, iron, tungsten, zirconium, hafnium, strontium, indium, cerium, yttrium, lanthanum, vanadium, niobium or tantalum; sulfides of cadmium, zinc, lead, silver, antimony or bismuth; selenides of cadmium or lead; and telluride of cadmium. Still other examples preferably used include complexes such as expressed by $M_xO_yS_z$ or $M^1_xM^2_yO_z$ (where M, $M^1$ and $M^2$ independently represent a metal element, O is oxygen, and x, y and z are the numbers combined so as to make the compound electrically neutral). Examples of the semiconductor compound include phosphates of zinc, gallium, indium, cadmium and so forth; selenide of gallium-arsenic or copper-indium; and sulfide of copper-indium.

Preferable examples of the inorganic fine particles include Si, SiC, BeO, $SiO_2$, $Al_2O_3$, $TiO_2$, $ZrO_2$, $SnO_2$, $Fe_2O_3$, $WO_3$, ZnO, $Nb_2O_5$, CdS, ZnS, PbS, $Bi_2S_3$, CdSe, CdTe, $As_2Se_3$, $LiNbO_3$, $BaTiO_3$, $SrTiO_3$, $SrCO_3$, $CaF_2$, $MgF_2$, GaP, InP, GaAs, $CuInS_2$, $CuInSe_2$ and $KH_2PO_4$ fine particles. More preferable examples of them include SiC, BeO, $Al_2O_3$, $TiO_2$, $SnO_2$, $Fe_2O_3$, $WO_3$, ZnO, $Nb_2O_5$, ZnS, PbS, $As_2Se_3$, $LiNbO_3$, $BaTiO_3$, $SrTiO_3$, $SrCO_3$, $CaF_2$, $MgF_2$, InP, GaAs and $KH_2PO_4$ fine particles.

In view of having high birefringence, more preferable examples of inorganic fine particles include SiC, BeO, $Al_2O_3$, $TiO_2$, $SnO_2$, ZnS, PbS, $As_2Se_3$, $LiNbO_3$, $BaTiO_3$, $SrTiO_3$, $SrCO_3$, $MgF_2$ and $KH_2PO_4$ fine particles. Among those, co-random $Al_2O_3$ fine particles, anatase-type $TiO_2$ fine particles, and $SnO_2$, $LiNbO_3$, $BaTiO_3$, $SrCO_3$ and $KH_2PO_4$ fine particles doped with stibium are preferred.

Anatase-type $TiO_2$ fine particles have a refractive index in a direction along with a long axis larger than that in a direction perpendicular to the long axis; and, being aligned in plane, they may give the increase in Rth. And, being aligned along with an axis monoaxially, they may give the increase in refractive index along with the axis. Needle-like $SrCO_3$ fine particles have a refractive index in a direction along with a long axis smaller than that in a direction perpendicular to the long axis; and, being aligned in plane, they may give the decrease in Rth. And, being aligned along with an axis monoaxially, they may give the decrease in refractive index along with the axis. Preferred examples of the process for aligning fine particles along with an axis monoaxially include film-stretching processes described later.

Two or more types of inorganic fine particles may be mixed. In such case, one is preferably selected from the group consisting of $TiO_2$, ZnO, $Nb_2O_5$, $SrCO_3$ and $SrTiO_3$. And another is preferably selected from the group consisting of $SnO_2$, $Fe_2O_3$ and $WO_3$. More preferable examples include the combinations of ZnO and $SnO_2$, ZnO and $WO_3$ or ZnO, and $SnO_2$ and $WO_3$. Inorganic fine particles having a different particle size each other and/or a different shape each other may be mixed.

There is no special limitation on processes for preparing inorganic fine particles used in the present invention, wherein the fine particles are preferably prepared according to the sol-gel process or the gel-sol process. Among others, "Zoru-Geru Hou no Kagaku (Science of Sol-Gel Process)", written by Sumio Sakuhana, published by Agne Shofu Publishing Inc. (1998); the sol-gel process described in "Soru-Geru Hou ni yoru Hakumaku Kotingu Gijutsu (Thin Film Coating Technique based on Sol-Gel Process)", compiled by Technical Information Institute Co., Ltd. (1995); and the gel-sol process described in Tadao Sugimoto, "Shin Geru-Zoru Hou ni yoru Tanbunsan Ryushi no Gosei to Saizu Keitai Seigyo (Synthesis and Size/Morphology Control of Monodisperse Particles based on New Gel-Sol Synthetic Process)", Materia, Vol. 35, No. 9, p.1012-1018 (1996) are preferable. It is also preferable to employ the method, developed by Degussa AG, comprising carrying out flame hydrolysis of a chloride compound in the presence of $O_2$ and $H_2$, to thereby prepare the oxide fine particles.

Titanium oxide ($TiO_2$) fine particles may be prepared according to any of the above-described, sol-gel process, gel-sol process, and the process based on the high-temperature hydrolysis of chloride in oxyhydrogen flame, and is preferably prepared according to the sulfuric acid process or the chlorine process described in "Sanka Chitan Bussei to Oyo Gijutsu (Physical Properties and Application Technologies of Titanium Oxide)", written by Manabu Kiyono, published by Gihodo Shuppann Co., Ltd. (1997). The sol-gel processes described in Barbe et al., Journal of American Ceramic Society, Vol. 80, No. 12, p. 3157-3171 (1997), and Burnside et al., Chemistry of Materials, Vol. 10, No. 9, p.2419-2425 are also preferred.

[Organic Compound to be Adsorbed to Inorganic Fine Particles]

The composition of the present invention comprises inorganic fine particles having adsorbed thereto molecules of an organic compound. The molecules adsorbed to the inorganic fine particles are those of an organic compound, and has adsorptive groups and a group capable of forming a liquid crystal core. The organic compound can be selected from liquid-crystalline compounds.

The group capable of forming a liquid crystal core will be explained to a further detail. In the present invention, the term "liquid crystal core" is used for any principal skeletons of liquid crystal molecules which can contribute to the generation of liquid crystallinity, and such skeleton is generally referred to as mesogen. Liquid crystal molecules exhibit liquid crystallinity, which is an intermediate state (mesophase) between a crystal state and an isotropic liquid state. There is no special limitation on the group capable of forming a liquid crystal core, and examples of the group include those described in "Flussige Kristalle in Tabellen II" (VEB Deutsche Verlag fur Grundstoff Industrie, Leipzig, 1984), in particular the description on pages 7 to 16, and in "Ekisho Binran (A Handbook of Liquid Crystal)", compiled by Editorial Committee for "A Handbook of Liquid Crystal", published by Maruzen Co., Ltd., 2000), in particular the description in Chapter 3. The group is preferably a residue of thermotropic liquid crystal, and more preferably a residue of rod-like liquid crystal and discotic liquid crystal. Among the residues of rod-like liquid crystal, residues of those exhibiting a nematic phase and a smectic-A phase are preferable, whereas among the residues of discotic liquid crystal, residues of those exhibiting a discotic nematic phase are preferable.

Preferable examples of the residue of discotic liquid crystal include benzene, triphenylene, torxene, trioxatorxene, anthraquinone, phthalocyanine, porphyrin, macrocyclin, bis(1,3-diketone) copper complex, tetraaryl bipyranylidene, tetrathiafulvalene and inositol.

More preferable examples of the group capable of forming a liquid crystal core include residues of rod-like liquid crystal. Such residue is the principal skeleton which can contribute to the generation of liquid crystallinity, called "mesogen" group or "core portion" of rod-like liquid crystal, and is preferably selected from a group represented by a formula (I) below.

Formula (I) $-Cy^1-L^1-(Cy^2-L^2)_m-Cy^3-$

In the formula, $L^1$ and $L^2$ respectively represent a single bond of a divalent linking group. The divalent linking group is preferably any one of divalent linking group selected from the group consisting of -O-, -S-, -CO-, -NR- (R represents a hydrogen atom (H) or a methyl or ethyl group), -CH=N-, -N=N-, divalent chain group, divalent cyclic group, and any combinations of them.

The divalent chain group is preferably selected from alkylene groups, alkenylene groups and alkynylene groups. The divalent chain group may have a linear or branched chain structure and have one or more substitutive groups. The divalent chain group is more preferably selected from $C_{2-8}$ alkylene, alkenylene and alkynylene groups such as an

ethylene group, trimethylene group, propylene group, tetramethylene group, 2-methyl-tetramethylene group, pentamethylene group, hexamethylene group, octamethylene group, 2-butenylene, and 2-butynylene group.

Examples of the divalent cyclic group are same as those for $Cy^1$, $Cy^2$ and $Cy^3$ described hereinafter.

In the formula (I), $Cy^1$, $Cy^2$ and $Cy^3$ respectively represent a divalent cyclic group. The group is preferably a 5-membered ring, 6-membered ring or 7-membered ring, more preferably a 5-membered ring or 6-membered ring, and still more preferably a 6-membered ring. The group may be a monocycle or a condensed ring residue, and preferably a monocycle residue. The group may be selected from aromatic ring residues, alicycle residues and heterocycle residues. Among these, preferable examples of the aromatic ring include benzene ring (in particular, 1,4-phenylene group), and naphthalene ring (in particular naphthalene-1,5-diyl group and naphthalene-2,6-diyl group), and preferable examples of the alicycle include cyclohexane ring (in particular, 1,4-cyclohexylene group) and bicyclo[2.2.2]octane ring, and preferable examples of the heterocycle include pyridine ring (in particular, pyridine-2,5-diyl group), pyrimidine ring (in particular, pyrimidine 2,5-diyl group), thiophene ring (in particular, thiophene-2,5-diyl group) and dioxane ring. $Cy^1$, $Cy^2$ and $Cy^3$ may independently have a substitutive group. Preferable examples of the substitutive group include halogen atom, cyano group, nitro group, $C_{1-5}$ alkyl group, $C_{1-5}$ alkyl group substituted by halogen atom(s), $C_{1-5}$ alkoxy group, $C_{1-5}$ alkylthio group, $C_{2-6}$ acyloxy group, $C_{2-6}$ alkoxycarbonyl group, carbamoyl group, carbamoyl group substituted by $C_{2-6}$ alkyl group, and $C_{2-6}$ acylamino group.

In the formula (I), m is an integer from 0 to 2. For m=2, two $L^{2}$' s and $Cy^2$ may be the same or different from each other.

Preferable examples of the rod-like liquid crystal residue include biphenyl group, phenylene carbonyl oxybiphenyl group, carbonyl oxybiphenyl group, terphenyl group, naphthylene carbonyloxyphenyl group, phenylene ethenylene carbonyloxy biphenyl group, phenylene ethynylene phenyl group, benzoic phenyl ester group, benzilidene aniline group, azobenzene group, azoxybenzene group, stilbene group, phenylene ethynylene carbonyloxy biphenyl group, naphthylene biphenyl group, and those in which their benzene rings are replaced with saturated rings or with heterocycles.

According to the present invention, being adsorbed to inorganic fine particles, molecules having an adsorptive group to inorganic fine particles and a group capable of forming a liquid crystal core are contained in the composition. Therefore, each adsorptive group is preferably a functional group readily adsorptive to inorganic fine particles. Preferable examples of the functional group may differ depending on species of inorganic fine particles (for example, metal species) and so forth. For inorganic fine particles composed of a gold-containing material, preferable examples of the adsorptive group include mercapto group and disulfide group. For inorganic fine particles' composed of an oxide (for example, metal oxide) material, preferable examples of the adsorptive group include COOH group, OH group, $SO_3H$ group, acidic groups such as those represented by a formula (1) or (2) described later, amino group or oxime, dioxime, hydroxyquinoline, chelating group such as salicylate or $\alpha$-ketoenolate group, the group represented by a formula (3) described later, the groups represented by a formula (4), (5) and (6) described later; and more preferable examples include COOH group or the salt thereof and the groups represented by the formula (1), (2) and (3) described later. For inorganic fine particles composed of metal carbonate material, preferable examples of the adsorptive group include the groups represented by the formula (4), (5) and (6) described later, COOH group or the salt thereof, and the groups represented by a formula (1) and (2) described later; and more preferable examples include COOH group and the salt thereof, and the groups represented by the formula (1) and (2) described later.

Preferable examples of the adsorptive group include phosphonic acid group represented by the formula (1) below or salt thereof, phosphoric acid monoester represented by formula the (2) below or salt thereof, or the group represented by the formula (3) below:

Formula (1) $-PO_3X_m$

Formula (2) $-OPO_3X_m$

Formula (3) $-Si(R^1)_{3-n}(OR^2)_n$

In the formulae (1) and (2), X independently represents a hydrogen atom, or mono- or divalent organic or inorganic cation, m is 1 or 2, where X represents a divalent organic or inorganic cation for m=1, and two X's individually represent a hydrogen atom or monovalent organic or inorganic cation for m=2.

For the case where m is 2, and both of two X's are monovalent organic or inorganic cations in the formulae in the above, the both may be different, but more preferably be the same in view of cost.

The monovalent organic or inorganic cation may be any cations capable of forming salt of phosphoric acid, and examples of monovalent organic cation include tetramethylammonium ion, tetraethylammonium ion, monoethanol ammonium ion, trimethylbenzyl ammonium ion, triethylbenzyl ammonium ion, di(hydroxyethyl) ammonium ion, N-methylpyridinium ion, tetramethylguanidium ion, and tetramethylphosphonium ion, more preferable examples among these include tetramethylammonium ion, tetraethylammonium ion, trimethylbenzyl ammonium ion, triethylbenzyl ammonium

ion, and N-methylpyridinium ion, and still more preferable examples include tetramethylammonium ion and tetraethylammonium ion. Examples of the monovalent inorganic cation include ammonium ion, lithium ion, sodium ion and potassium ion, more preferable examples include ammonium ion, sodium ion and potassium ion, and still more preferable examples include sodium ion and potassium ion.

The divalent organic or inorganic cation may be any cations capable of forming salt of phosphoric acid, wherein the divalent organic cation can be exemplified by the above-described organic ammonium coupled with a coupling group such as methylene group, alkylether and the like. The divalent inorganic cation can be exemplified by calcium ion, magnesium ion, barium ion and the like, wherein calcium ion is particularly preferable.

In the formula (3), $R^1$ and $R^2$ respectively represent a $C_{1-4}$ alkyl group, and n is an integer from 1 to 3. Examples of the alkyl group include methyl, ethyl, *n*-propyl, isopropyl and *n*-butyl. Preferably, n is 2 or 3, and more preferably 3.

For the case where the absorptive group is a group represented by the formula (3), the inorganic fine particles are preferably composed of a metal chalcogenide in view of exhibiting an excellent adsorptivity. Preferable examples of the metal chalcogenide are as described in the above. Among the metal chalcogenides, metal oxide ($SiO_2$, $Al_2O_3$, $TiO_2$, $ZrO_2$, $SnO_2$, $Fe_2O_3$, $WO_3$, ZnO, $Nb_2O_5$, etc.) is more preferable. Preferable examples of the metal oxide includes $SiO_2$, $Al_2O_3$, $TiO_2$, $ZrO_2$, $SnO_2$, ZnO and $Nb_2O_5$, more preferable examples include $TiO_2$, $ZrO_2$, $SnO_2$, ZnO and $Nb_2O_5$, and still more preferable examples include $TiO_2$, $ZrO_2$ and ZnO.

The absorptive group represented by the formula (4), (5) or (6) is also preferred.

Formula (4)

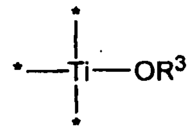

Formula (5)

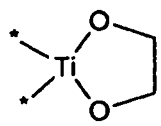

Formula (6)

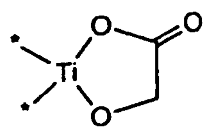

In the formulae, each "*" points a position capable of binding to a group, capable of forming a liquid crystal core, directly or through a kinking group.

In the formula (4), $R^3$ represents a $C_{1-4}$ alkyl group. Examples of the alkyl group include methyl, ethyl, n-propyl, i-propyl and n-butyl, and i-propyl is more preferred.

The adsorptive group may bind to the group capable of forming a liquid crystal core through a linking group. Examples of the linking group include $C_{1-18}$, more preferably $C_{1-6}$ substituted or non-substituted, straight-chain or branched alkylene; $C_{1-18}$, more preferably $C_{1-6}$ straight-chain or branched alkylene interposed with one or more ether bonds; $C_{6-18}$, more preferably $C_{6-12}$ substituted or non-substituted arylene; O, NH, S, CONH, NHCO, and 5- or 6-membered heterocycle.

It is preferable for the molecules to be adsorbed to inorganic fine particles to additionally have a substitutive group exhibiting an affinity for a polymer material to be used in the composition. The affinity between a substitutive group and a polymer material can be estimated from their solubility parameters (SP value(s)), and the SP values are close to each other. An SP value can be calculated according to the method proposed by Hoy et al in Journal of Paint Technology, vol. 42, pp. 76, in 1970. SP values of polymer materials can be calculated by using the equation below.

$$SP = a_1 \times SP_1 + a_2 \times SP_2 + a_3 \times SP_3 + \ldots\ldots\ldots.$$

In the equation, each of $SP_1$, $SP_2$ and $SP_3$ is an SP value of homopolymer of each monomer which is one of monomers used in preparing a target polymer, and can be found in a book, whose title is "POLYMER HANDBOOK THIRD EDITION". In the equation, each of $a_1$, $a_2$ and $a_3$ is a mass fraction of each monomer used in preparing a target polymer.

Preferable examples of the substitutive group vary, of course, depending on species of the polymer material to be used together. Straight-chain or branched alkyl group may effectively function for various polymer materials. The substitutive groups having a CO group or COO group are preferable for use with acrylic polymers such as PMMA. The substitutive groups having an ether group (more preferably alkoxy alkyloxy group, and still more preferably 3-methoxybutoxy group) or a sugar derivative are preferable for use with a cellulose acylate-base polymer.

Examples of the organic compound having an adsorptive group to the inorganic fine particles and a group capable of forming a liquid crystal core, used for the present invention, include, however are not limited to, those shown below. It is to be understood that examples shown below include not only liquid crystalline compounds, but also non-liquid crystalline compounds such as Compounds C-4 and C-5.

C-1

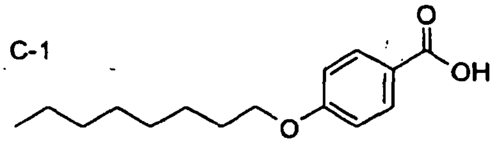

C-2

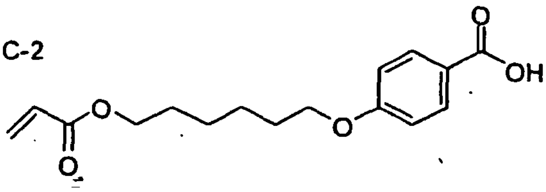

C-3

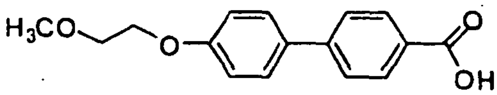

C-4

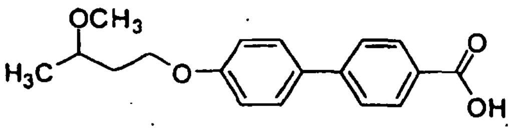

C-5

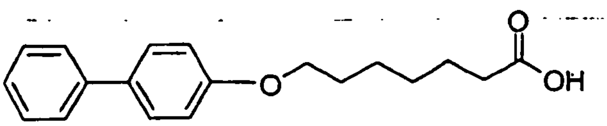

C-6

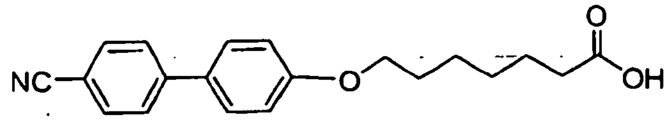

C-7

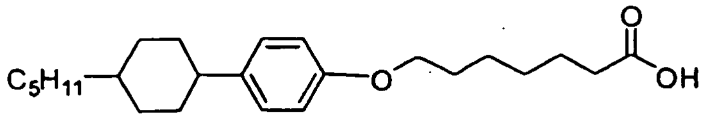

C-8

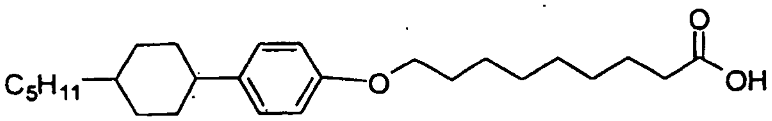

C-9

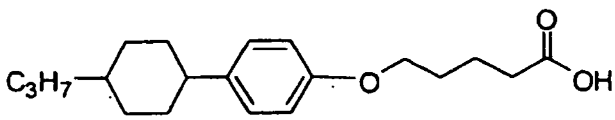

C-10

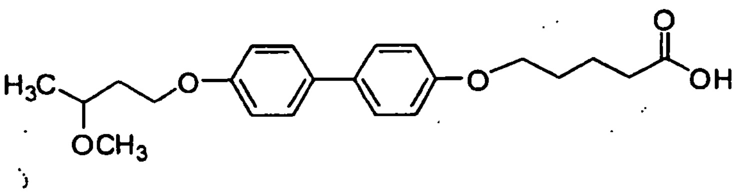

C-11

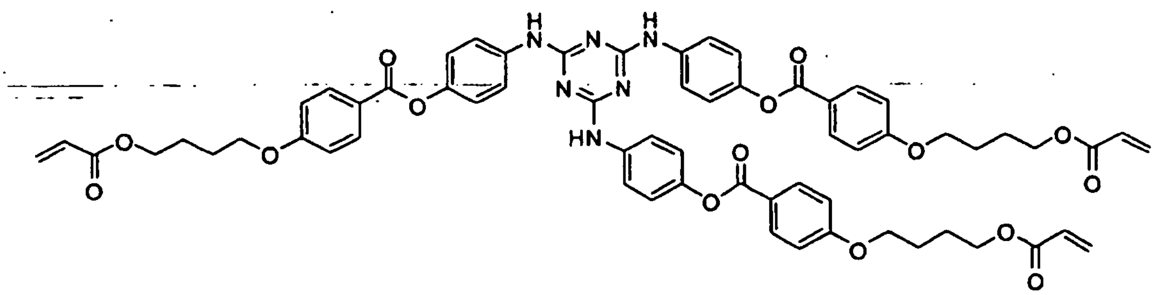

C-12

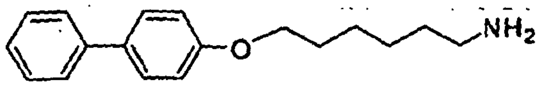

C-13

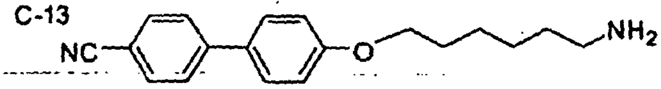

C-14

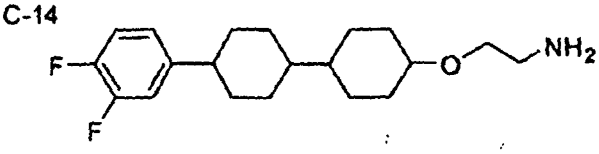

C-15

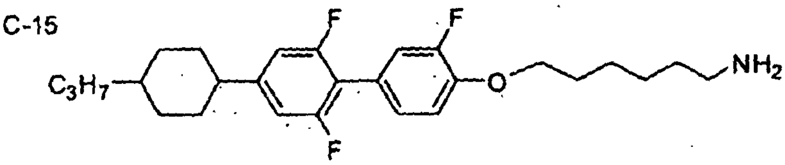

C-16

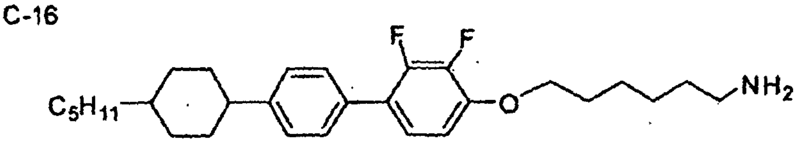

C-17

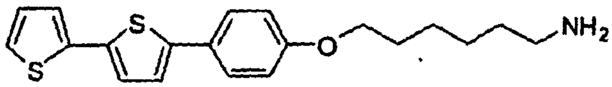

C-18

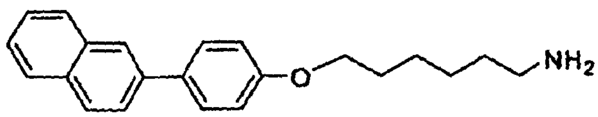

C-19

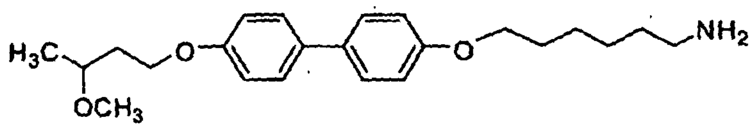

C-20

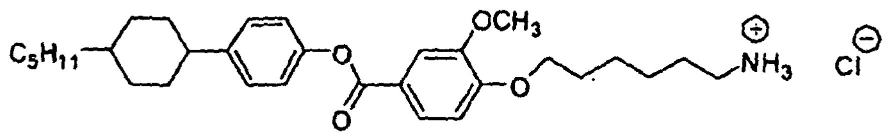

C-21

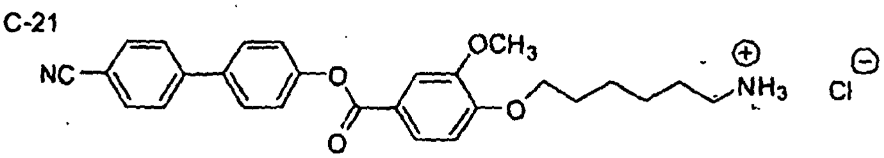

C-22

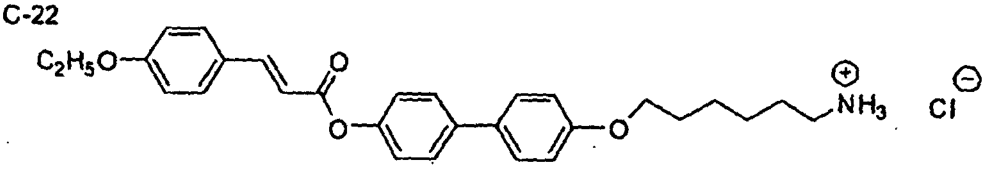

C-23

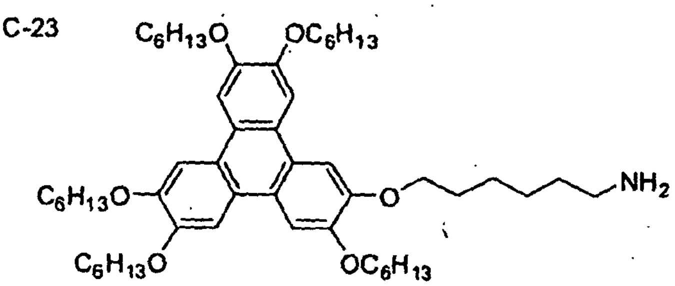

C-24

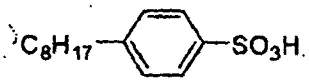

C-25

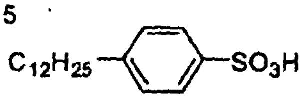

C-26

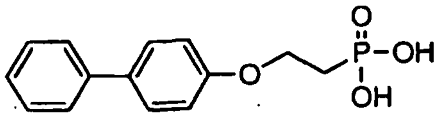

C-27

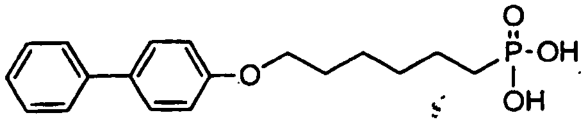

C-28

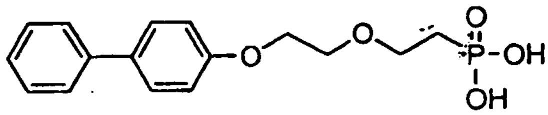

C-29

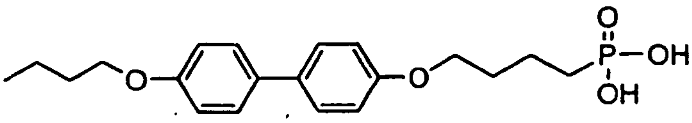

C-30

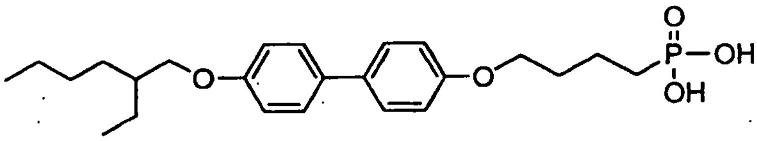

C-31

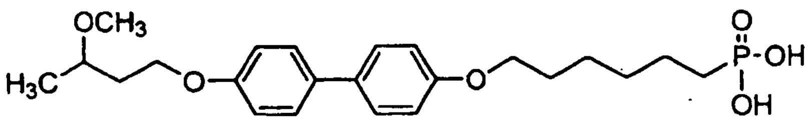

C-32

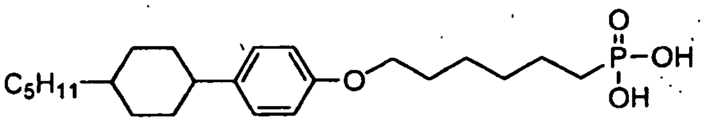

C-33

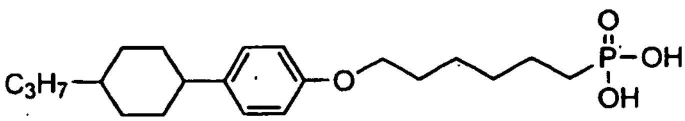

C-34 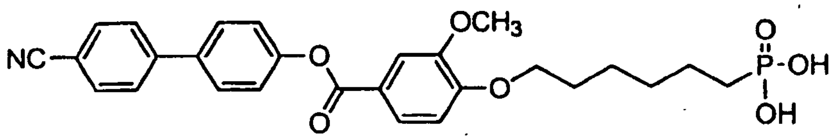

C-35 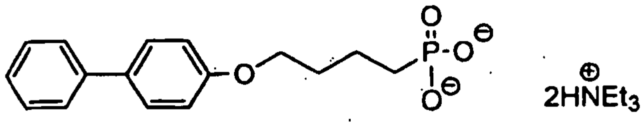

C-36 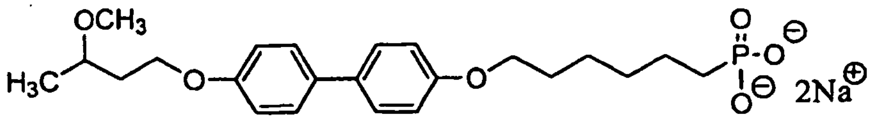

C-37 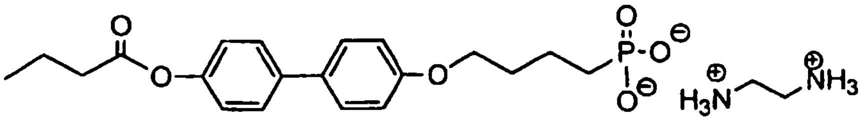

C-38 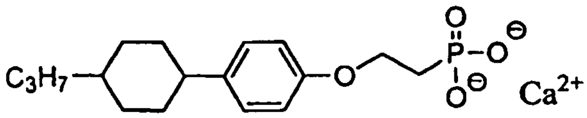

C-39 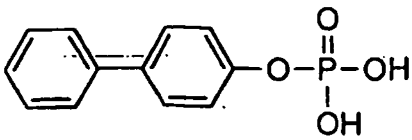

C-40 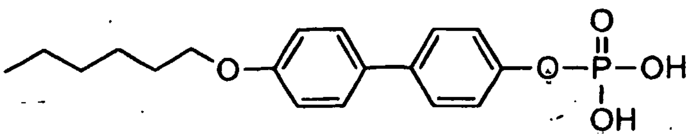

C-41 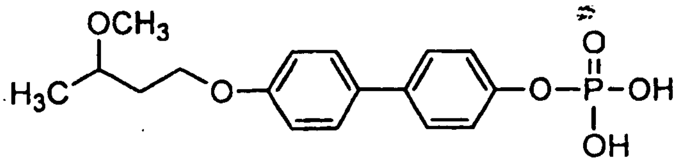

C-42 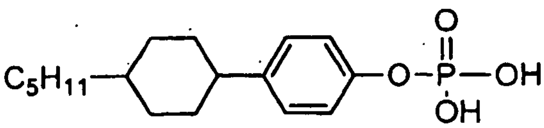

C-43

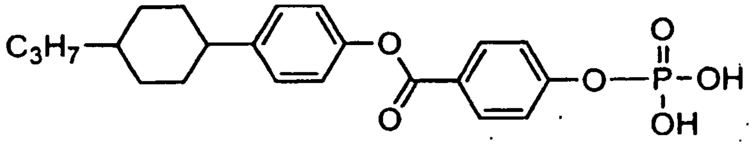

C-43

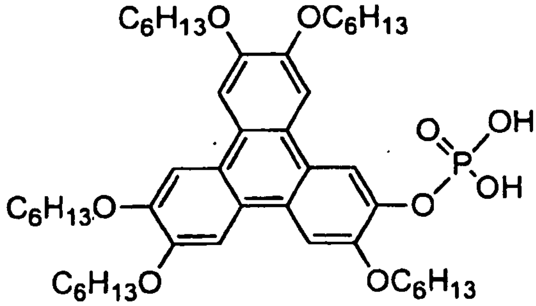

C-44

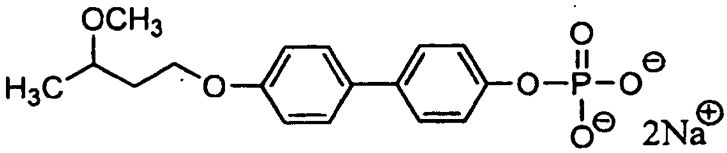

C-45

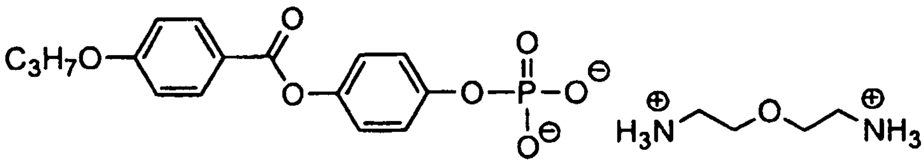

C-46

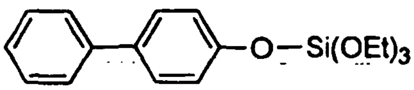

C-47

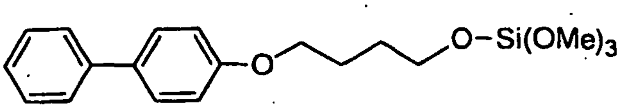

C-48

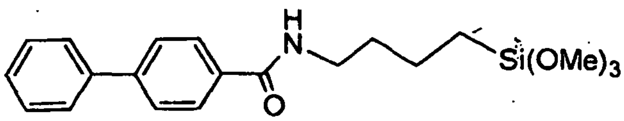

C-49 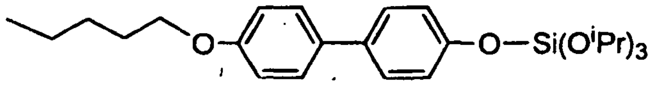

C-50 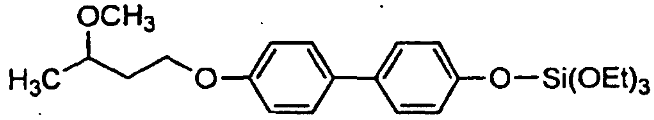

C-51 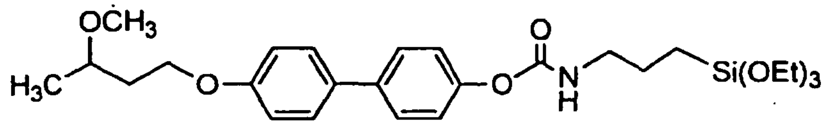

C-52 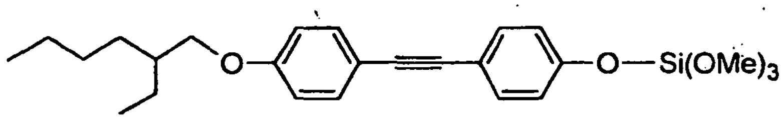

C-53 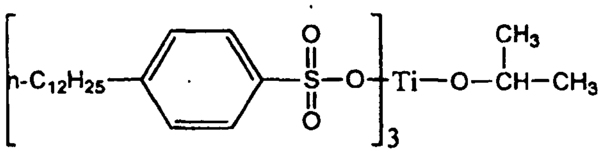

C-54 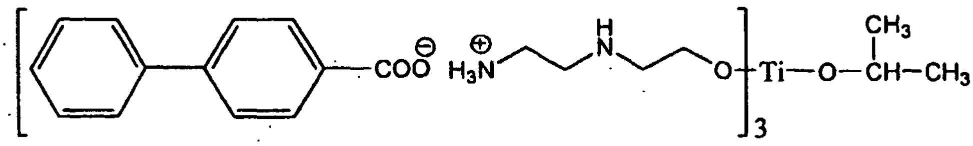

(Compounds C-46 to C-52 are not of the invention and are for reference purposes only).

[Inorganic Fine Particles Having Adsorbed Thereto Molecules Having Absorptive Groups and Group Capable of Forming Core Portion of Liquid Crystal Compound]

In the present invention, there are no special limitations on the manner of adsorption of the molecules having predetermined groups. According to the invention, the molecules having the predetermined groups may be adsorbed to inorganic molecules in the manner of physical adsorption, chemical adsorption, or intermediate therebetween. Among these, chemical adsorption is preferable. Inorganic fine particles having molecules adsorbed thereto are obtained, specifically by mixing inorganic fine particles and a compound to bring them into contact, to thereby allow molecules of the compound to adsorb physically and/or chemically to the inorganic fine particles. The mixing and bringing them into contact can be proceeded using a solvent, or in a polymer dope solution described below. Presence or absence of adsorbed molecules can be confirmed by UV-visible absorption spectrometry, IR absorption spectrometry or thermal analysis. Adsorption of molecules of the compound to inorganic fine particles is preferably accomplished in a form of single-layered coverage. Preferable amount of adsorption varies depending on the particle size, because the surface area per unit mass varies depending on the particle size, wherein it preferably falls in the range from 10 to 300% by mass, and more preferably from 20 to 150% by mass.

For the case where the composition of the present invention is prepared as a dope, coating liquid or the like, and is used for producing anisotropic films or the like, the organic compound molecules may exist in the non-adsorbed

state in the dope or the coating liquid. In such case, the absorption of the organic compound molecules to inorganic fine particles may be promoted in the step for drying after casting of the dope or after coating of the coating liquid.

It may be possible to control at which part, for example, the ends or the faces of molecules, molecules are adsorbed to inorganic fine particles, by introducing an adsorptive group at a specific position of the molecules. By appropriately combining species of the adsorptive groups and properties of particle surface, it may also be possible to adsorb molecules to a predetermined portion of inorganic fine particles.

In the composition of the present invention, preferable content of inorganic fine particles having adsorbed thereto the molecules having the predetermined groups varies depending on purposes of application of the composition, wherein for the case of producing optical films, a content of 0.5 to 20% by mass in the composition is generally preferable in view of obtaining a desirable formability and optical anisotropy, and a content of 1 to 10% by mass is more preferable.

[Polymer Material]

In the present invention, a term "polymer material" is used for not only any natural polymers but also any synthetic polymers. The composition to be used for producing films may comprise a polymer material formable in a film form. Examples of the polymer material formable in a film form include cellulose derivatives, polycarbonates, polysulfones, polyethersulfones, polyacrylates, polymethacrylates, polyethylene terephtalates, polyethylene naphthalates, syndiotactic polystyrenes, polyphenylene sulfides, polyarylates, polyestersulfones, polyimides, polyetherimides, - cyclic polyolefinic polymers, and brominated phenoxy poylmers. Cyclic polyolefinic polymers such as called COC and COP polymers and cellulose derivatives are preferable. Cellulose acylate is particularly preferable.

Paragraphs below will detail cellulose acylate.

[Cellulose Acylate]

Examples of cellulose acylate which can be employed in the present invention as a polymer material include cellulose triacylate and cellulose acetate propionate. Two or more cellulose compounds may be used in a mixed form in the present invention.

Preferable embodiments of the present invention will be explained referring to cellulose acylate.

[Source Cotton for Cellulose Acylate]

Source cellulose for cellulose acylate applicable to the present invention includes cotton linter, and wood pulp (hard-wood pulp, soft-wood pulp), wherein cellulose acylate obtained from both source celluloses can be used, allowing mixed use thereof on occasions. Detailed description of these source celluloses can be found, for example, in "Purasuchikku Zairyo Koza (17) Sen'iso-kei Jushi (Lecture Course of Plastic Materials (17), Fiber-Forming Resins" (written by Marusawa and Uda, published by the Nikkan Kogyo Shimbun Co., Ltd., 1970) and JIII Journal of Technical Disclosure 2001-1745 (p.7-8), without any specific limitations.

The above-described specific cellulose acylate is preferably a mixed aliphatic acid ester of cellulose obtained by substituting hydroxyl groups of the cellulose with acetyl groups, and with acyl groups having 3 or more carbon atoms, wherein the degree of substitution of the hydroxyl groups of the cellulose satisfies formulae (I) and (II) below:

$$\text{Formula (I): } 2.0 \leq A+B \leq 3.0$$

$$\text{Formula (II): } 0 < B$$

where "A" represents the degree of substitution of acetyl groups substituting the hydroxyl groups of the cellulose, and "B" represents the degree of substitution of acyl group having 3 or more carbon atoms substituting the hydroxyl groups of the cellulose.

A glucose unit composing the cellulose through β-1,4 bond has a free hydroxyl group at each of the 2-, 3- and 6-positions. The cellulose acylate is a polymer obtained by esterifying a part of, or all of these hydroxyl groups with acyl groups. The degree of acyl substitution means the ratio of esterification of the cellulose for each of the 2-, 3- and 6-positions (100% esterification is expressed as a degree of esterification of 1).

[Polymerization Degree of Cellulose Acylate]

The polymerization degree of the cellulose acylate is preferably 180 to 700 on the basis of mean viscometric degree of polymerization, wherein 180 to 550 is more preferable for cellulose acetate, 180 to 400 is still more preferable, and 180 to 350 is particularly preferable. By adjusting the degree of polymerization to 700 or below, a dope solution of the cellulose acylate is successfully prevented from becoming excessively viscous, raising a tendency of facilitating film formation by casting. On the other hand, the degree of polymerization adjusted to 180 or above preferably raises a tendency of improving strength of the resultant film. The mean degree of polymerization can be measured according to the intrinsic viscosity method proposed by Uda et al. (Kazuo Uda and Hideo Saito, "Sen' i Gakkai Shi (Fiber) ", Vol. 18, No. 1, p.105-120, 1962). More specifically, the measurement can be made according to the method described in Japanese Laid-Open Patent Publication No. H9-95538.

Molecular weight distribution of the cellulose acylate preferably used in the present invention can be evaluated by gel permeation chromatography, wherein a multi-dispersibility index Mw/Mn (Mw is mass average molecular weight, and Mn is number average molecular weight) is preferably small, and a molecular weight distribution is preferably narrow. Specifically, a value of Mw/Mn is preferably 1.0 to 3.0, more preferably 1.0 to 2.0, and still more preferably 1.0 to 1.6.

Removal of low molecular components raises the mean molecular weight (degree of polymerization), but it is effective because the viscosity is lowered than that of general cellulose acylate. The cellulose acylate having a small content of low molecular components can be obtained by removing the low molecular components from a cellulose acylate synthesized by general methods. Removal of the low molecular components can be carried out by washing the cellulose acylate using an appropriate organic solvent. For the case where the cellulose acylate having a small content of lower molecular components is manufactured, the amount of addition of a sulfuric acid catalyst in the acylation reaction is preferably adjusted to 0.5 to 25 parts by mass per 100 parts by mass of cellulose. Adjustment of the amount of addition of the sulfuric acid catalyst allows synthesis of cellulose acylate desirable also in terms of molecular weight distribution (uniform in the molecular weight distribution). The cellulose acylate preferably shows a moisture content of 2% by mass or below when it is used, more preferably 1% by mass or below, and still more preferably 0.7% by mass or below. General cellulose acylate is known to have a moisture content of 2.5 to 5% by mass. In this case, it is preferable to dry the cellulose acylate in order to adjust the moisture content thereof to the desirable value. Methods of drying are not specifically limited so far as the target moisture content can be attained.

Source cotton for the cellulose acylate and methods of synthesis preferably applicable to the present invention can be found, for example, in Journal of Technical Disclosure (No. 2001-1745, p.7-12, issued on March 15, 2001 by JIII).

The composition of the invention may comprise two or more species of polymer material and/or inorganic fine particles having adsorbed thereto molecules, and may comprise any other additives described below, so far as desired physical properties of the composition will not be impaired. The composition of the invention may also comprise one or more a photo-sensitive isomerization compounds. Such compounds are specifically descried, for example, in Kobunshi (Polymers), 41(12), 1992, p.884; "Kuromikku Zairyo to' Oyo (Chromic Materials and Application)", published by CMC Publishing Co., Ltd., p.221; "Mekanokemisutori (Mechanochemistry)", published by Maruzen Co., Ltd., p.21; and "Kobunshi Ronbun-Shu (Papers on Polymers)", Vol. 147 (10), 1991, p.771.

[Other Additives]

The composition of the present invention may contain any other additives capable of imparting predetermined functions if desired. Examples of the additives include UV absorbers, plasticizers, anti-degradation agents, fine particles (not having adsorbed thereto molecules having predetermined groups) and optical property adjusting agents.

[UV Absorber]

The composition of the present invention may contain an UV absorber. Any arbitrary species of UV absorber is selectable depending on purposes, such as from those of salicylate ester-base, benzophenone-base, benzotriazole-base, benzoate-base, cyanoacrylate-base and nickel complex salt-base, and preferably from those of benzophenone-base, benzotriazole-base and salicylate ester-base.

Examples of the benzophenone-base UV absorber include' 2,4-dihydroxybenzophenone, 2-hydroxy-4-acetoxybenzophenone, 2-hydroxy-4-methoxybenzophenone, 2,2'-di-hydroxy-4-methoxybenzophenone, 2,2'-di-hydroxy-4,4'-methoxybenzophenone, 2-hydroxy-4-n-octoxybenzophenone, 2-h-ydroxy-4-dodecyloxy benzophenone, and 2-hydroxy-4-(2-hydroxy-3-methacryloxy) propoxybenzophenone.

Examples of the benzotriazole-base UV absorber include 2-(2'-hydroxy-3'-*tert*-butyl-5'-methylphenyl)-5-chloro benzotriazole, 2-(2'-hydroxy-5'-*tert*-butylphenyl)benzotriazole, 2-(2'-hydroxy-3',5'-di-*tert*-amylphenyl)benzotriazole, 2-(2'-hydroxy-3',5'-di-*tert*-butylphenyl)-5-chlorobenzotriazol e, and 2-(2'-hydroxy-5'-*tert*-octylphenyl)benzotriazole.

Examples of the salicylate ester-base ones include phenylsalicylate, p-octylphenylsalicylate, and *p*-*tert*-butyl

phenylsalicylate.

Among these UV absorbers exemplified in the above, particularly preferable ones are 2-hydroxy-4-methoxybenzophenone, 2,2'-di-hydroxy-4,4'-methoxybenzophenone, 2-(2'-hydroxy-3'-*tert*-butyl-5'-methylphenyl)-5-chlorobenzotriazole, 2-(2'-hydroxy-5'-*tert*-butylphenyl)benzotriazole, 2-(2'-hydroxy-3',5'- di-*tert*-amylphenyl)benzotriazole, and 2-(2'-hydroxy-3',5'-di-*tert*-butylphenyl)-5-chlorobenzotriazole.

It is preferable to use a plurality of UV absorbers differing in the absorption wavelength in combination, in view of obtaining an excellent interception effect over a broad wavelength range. For the case where the composition of the present invention is used as a source material of components, such as optical films, for liquid crystal display device, the UV absorber is preferably such as being excellent in absorptivity of ultraviolet radiation of 370 nm or shorter in view of preventing degradation thereof, and such as showing a small absorption of visible light of 400 nm or longer in view of display quality. Particularly preferable examples of the UV absorber include the above-described benzotriazole-base compounds, benzophenone-base compounds, and salicylic acid ester-base compounds. Among these, benzotriazole-base compounds are preferable because they are less causative of unnecessary coloring of the cellulose ester.

As the UV absorber, it is also allowable to adopt the compounds described in Japanese Laid-Open Patent Publication Nos. S60-235852, H3-199201, H5-1907073, H5-194789, H5-271471, H6-107854, H6-118233, H6-148430, H7-11056, H7-11055, H7-11056, H8-29619, H8-239509 and 2000-204173. Amount of addition of the UV absorber is preferably 0.001 to 5% by mass of the polymer material (preferably cellulose acylate), and more preferably 0.01 to 1% by mass. The amount of addition of 0.001% by mass or above is preferable in view of fully exhibiting effects of addition, and the amount of addition of 5% by mass or below is preferable typically in view of suppressing breeding-out of the UV absorber onto the film surface when the composition of the present invention is used to fabricate films.

[Anti-Degradation Agent]

The composition of the present invention may contain an anti-degradation agent. The anti-degradation agent may be added for the purpose of prevent-ing the polymer material, such as cellulose acylate, from degrading or decomposing. Applicable examples of the anti-degradation agent include butylamine, hindered amine compound (Japanese Laid-Open Patent Publication No. H8-325537), guanidine compound (Japanese Laid-Open Patent Publication No. H5-271471), benzotriazole-base UV absorbing agent (Japanese Laid-Open Patent Publication No. H6-235819), and benzophenone-base UV absorbing agent (Japanese Laid-Open Patent Publication No. H6-118233).

[Plasticizer]

The composition of the present invention may contain a plasticizer. The plasticizer is preferably phosphate ester and/or carboxylic ester. Preferable examples of the phosphate ester-base plasticizer include triphenyl phosphate (TPP), tricresyl phosphate (TCP), cresyldiphenyl phosphate, octyldiphenyl phosphate, biphenyldiphenyl phosphate (BDP), trioctyl phosphate, and tributyl phosphate. Preferable examples of the carboxylic ester-base plasticizer include dimethyl phthalate (DMP), diethyl phthalate (DEP), dibutyl phthalate (DBP), dioctyl phthalate (DOP), diphenyl phthalate (DPP), diethylhexyl phthalate (DEHP), O-acetyltriethyl citrate (OACTE), O-acetyltributyl citrate (OACTB), acetyltriethyl citrate, acetyltributyl citrate, butyl oleate, methylacetyl ricinolate, dibutyl sebacate, triacetin, tributylin, butylphthalylbutyl glycolate, ethylphthalylethyl glycolate, methylphthalylethyl glycolate, and butylphthalylbutyl glycolate. The plasticizer is preferably any of' those of (di)pentaerythritol ester, glycerol ester, or diglycerol ester.

[Release Agent]

The composition of the present invention may contain a release agent depending on purposes of application. Ethyl esters of citric acid can be exemplified as preferable examples of the release agent.

[IR Absorbing Agent]

The composition of the present invention may contain an IR absorbing agent depending on purposes of application. The IR absorbing agent is preferably any of those disclosed in Japanese Laid-Open Patent Publication No. 2001-194522.

[Dye]

The composition of the present invention may contain a dye for hue control. Content of the dye is preferably 10 to 1000 ppm relative to the polymer material such as cellulose acylate, and more preferably 50 to 500 ppm. Inclusion of the dye typically makes it possible to moderate light piping, and thereby to improve yellowing, when the composition

of the present invention is used for fabricating films.

[Matting Agent Particles]

The composition of the present invention typically to be used in preparing films may be added with matting agent particles. Particles applicable as the matting agent include silicon dioxide, titanium dioxide, aluminum oxide, zirconium oxide, calcium carbonate, talc, clay, calcinated kaolin, calcinated calcium silicate, hydrated calcium silicate, aluminum silicate, magnesium silicate and calcium phosphate. Those containing silicon are preferable as the particles in view of lowering the turbidity, wherein silicon dioxide is particularly preferable. Particle of silicon dioxide preferably has a primary mean particle size of 20 nm or smaller, and an apparent specific gravity of 70 g/liter or above. Those having a mean particle size of the primary particle of as small as 5 to 16 nm are more preferable in view of lowering haze of the film. The apparent specific gravity is preferably 90 to 200 g/liter or above, and more preferably 100 to 200 g/liter or above. Larger apparent specific gravity allows preparation of a dispersion of higher concentration, and is preferable in view of improving the haze and aggregate.

The composition of the present invention contains inorganic particles having adsorbed thereto molecules having adsorptive groups to the inorganic particles and a group capable of forming a liquid crystal core, and preferably molecules further having a substitutive group exhibiting an affinity for a polymer material, so that similar effects may sometimes be obtained without adding the matting agent, when the above-described inorganic fine particles can function also as a matting agent.

These particles can generally form secondary particles having a mean particle size of 0.1 to 3.0 μm, and these particles reside in the film as aggregates of the primary particles, forming irregularity of 0.1 to 3.0 μm on the film surface. The mean particle size of the secondary particles is preferably 0.2 μm to 1.5 μm, more preferably 0.4 μm to 1.2 μm, and most preferably 0.6 μm to 1.1 μm. The particle size of the primary/secondary particles was determined by observing the particles in the film using a scanning electron microscope, and by finding the diameter of a circle circumscribing the particle. Mean particle size was determined by observing 200 particles in different fields of view, and averaging the diameters.

Particles of silicon dioxide applicable herein are commercially available under the trade names, for example, of Aerosil R972, R972V, R974, R812, 200, 200V, 300, R202, OX50 and TT600 (all from Nippon Aerosil Co., Ltd.). Particles of zirconium oxide which can be used in the present invention are commercially available under the trade names, for example, of Aerosil R976 and R811 (all from Nippon Aerosil Co., Ltd.).

Among these, Aerosil 200V and Aerosil R972V, which are silicon dioxide particles having a primary mean particle size of 20 nm or below and an apparent specific gravity of 70 g/liter or above, are particularly preferable by virtue of their large effects of lowering the friction coefficient while keeping the turbidity of the optical film small.

[Ratio of Addition of Compounds]

For the case where the composition of the present invention is used for preparing films, the total content of the compounds having molecular weights of 3000 or smaller in the composition is preferably 5 to 45% by mass relative to the mass of the polymer material such as cellulose acylate. More preferable range is from 10 to 40% by mass, and still more preferable range is from 15 to 30% by mass. These compounds are the above-described those having predetermined groups adsorbed on the inorganic particles, and UV protection agent, plasticizer, anti-degradation agent, particles, release agent, IR absorbing agent and the like added as requested. It is more preferable that the total content of the compounds having molecular weights of 2000 or smaller falls in the above-described range. By adjusting the total content of these compounds to 5% by mass or more, properties of the polymer material, such as cellulose acylate, as a single component becomes less likely to exhibit, and consequently the optical performances and physical strength become less likely to vary with changes in temperature and humidity. On the other hand, adjustment of the total content of these compounds to 45% by mass or less desirably raises a tendency of preventing the compounds from exceeding solubilization limit in the polymer film such as a cellulose acylate film, and from depositing on the film surface, thereby suppressing hazing of the film (bleeding out from the film).

The additives added, if necessary, to the composition of the present invention may be solid or may be oily, without specific limitations on the melting points and boiling points thereof. For example, UV absorbers having melting points of lower than 20°C and not lower than 20°C may be used in a mixed form, or plasticizers may be mixed and used in a similar manner. More specifically, the method described in Japanese Laid-Open Patent Publication No. 2001-151901 is adoptable.

[Preparation of Composition of Present Invention]

For the case where cellulose acylate is used as the polymer material, the composition of the present invention

can be prepared typically by the method described below. First, a solution of cellulose acylate is prepared, and the solution is added with the inorganic fine particles having adsorbed thereto the above-described molecules having predetermined groups. Various additives (for example, UV protection agent, plasticizer, anti-degradation agent, particles, optical property adjusting agent, etc.) may be added if necessary. Timing of addition of the inorganic fine particles having adsorbed thereto molecules having predetermined groups, and other additives is not specifically limited. All of them may be added at once, or one or more ingredients may be added previously.

The composition of the invention may be prepared as a dope and used for producing films according to a solvent cast method. An exemplary process for producing a film according to the solvent cast method using cellulose acylate will be explained below.

First, a solution of cellulose acylate is prepared. Main solvent used for preparation of the dope is preferably selected from $C_{3-12}$ ester, ketone, ether and ester, and $C_{1-7}$ halogen-containing hydrocarbons. The ester, ketone and ether may have a cyclic stricture. Any compounds having two or more functional groups of the ester, ketone and ether (more specifically -O-, -CO- and COO-) may be used as the main solvent, allowing incorporation of other functional groups such as alcoholic hydroxyl group. The number of carbon atoms of the main solvent having two or more functional groups may be acceptable if it falls in the specified range of a compound having any.of the functional groups.

Any chlorine-containing halogenated hydrocarbon may be used as the main solvent, or non-chlorine-containing solvent may also be used as a main solvent, as described in Journal of Technical Disclosure 2001-1745, p.12-16, issed in 2001 by JIII).

As for methods of preparing the cellulose acylate solutions used for the solvent cast method, such as solvent species to be adopted and methods of dissolving them, those disclosed in patent documents listed below can be exemplified as preferable modes of embodiments.

Japanese Laid-Open Patent Publication Nos. 2000-95876, H12-95877, H10-324774, H8-152514, H10-330538, H9-95538, H9-95557, H10-235664, H12-63534, H11-21379, H10-182853, H10-278056, H10-279702, H10-323853, H10-237186, H11-60807, H11-152342, H11-292988, H11-60752 and H11-60752.

These patent documents describe not only solvents preferably applicable to preparation of the cellulose acylate solution, but also physical properties of the solution and coexistent substances to be brought into coexistence, all of which are understood as preferable modes of embodiment of the present invention.

The dope is added with the above-described inorganic fine particles having adsorbed thereto molecules having predetermined groups, and with additives optionally added if necessary. These agents may be added at any points of time during preparation process of the dope, or may be added at the end of the dope preparation process.

For example, the UV absorber may be added while cellulose acylate is dissolved, or may be added with the dope after dissolution. A mode of embodiment wherein an UV absorber solution is added to the dope immediately before casting, using a static mixer or the like, is particularly preferable in view of readily adjusting the spectral absorption property: Similarly for the case where any dye is added to the film, the dye may be added together with cellulose acylate and a solvent when the cellulose acylate solution is prepared, or may be added during, or immediately after the preparation of the solution. The dye may also be added to an UV absorber solution to be added in-line. The dyes described in Japanese Laid-Open Patent Publication No. H5-34858 can be used.

For the purpose of obtaining the cellulose acylate film containing the fine particles having a small secondary mean particle size, there are several possible techniques of preparing a dispersion of the fine particles. For example, there is known a method such that a particle dispersion is preliminarily prepared by mixing and stirring the solvent and fine particles, the particle dispersion is then added to a small volume of cellulose acylate solution separately prepared and stirred for dissolution, and is further mixed with a main cellulose acylate dope. This method is advantageous in terms of excellence in dispersibility of the silicon dioxide fine particles, and is preferable because the silicon dioxide fine particles are less likely to re-aggregate. Another known method is such that a solvent is added with a small amount of cellulose ester so as to dissolve it under stirring, further added with fine particles, dispersed using a dispersion machine to thereby prepare a particle addition solution, and the particle addition solution is thoroughly mixed with a dope using an in-line mixer. The present-invention is by no means limited to these methods, wherein concentration of silicon dioxide in the process of mixing and dispersing the silicon dioxide fine particles with a solvent and so forth is preferably 5 to 30% by mass, more preferably 10 to 25% by mass, and still more preferably 15 to 20% by mass. Higher dispersion concentration can lower turbidity of the solution relative to the amount of addition, and is preferable in view of improving haze and aggregation. The final amount of addition of the matting agent in the dope of cellulose acylate is preferably 0.01 to 1.0 g per 1 $m^2$, more preferably 0.03 to 0.3 g, and most preferably 0.08 to 0.16 g.

The solvent adopted herein are preferably lower alcohols such as methanol, ethanol, propanol, isopropanol and butanol. There are no special limitations on the solvent other than the lower alcohols, but it is preferable to use solvents used for film formation of cellulose ester.

[Production Process of Cellulose Acylate Film]

(Dissolution Process)

There are no special limitations on methods of dissolution in preparation of a cellulose acylate solution (dope). Preparation of the dope may be carried out at room temperature or according to a cold dissolution or high-temperature dissolution method or combination of these methods. The processes detailed in Journal of Technical Disclosure (No. 2001-1745, p. 22-25, issued on March 15, 2001 by JIII) are preferably adoptable to preparation of the cellulose acylate solution, concentration of the solution with progress of the dissolution process, and filtration in the present invention.
The degree of dope clearness of the cellulose acylate solution is preferably 85% or above, more preferably 88% or above, and still more preferably 90% or above. A specific method of calculating the degree of dope clearness is such as placing the dope solution into 1 cm × 1 cm glass cell, and absorbance at 550 nm is measured using a spectrophotometer (Model UV-3150, from Shimadzu Corporation). The solvent only is preliminarily measured as a blank, and the degree of clearness of the cellulose acylate solution is calculated based on difference with the blank absorbance.

(Casting, Drying, and Rolling-up Processes)

Next, thus prepared cellulose acylate solution is cast so as to make a film. Methods and apparatuses employed in producing the cellulose acylate film can widely selected from conventional solvent-cast film forming methods and solvent-cast film forming apparatuses having conventionally been employed in manufacturing cellulose triacetate films. More specifically, the dope (cellulose acylate solution) prepared in a melting apparatus (tank) is once stored in a storage tank so as to expel bubbles contained in the dope for final preparation. The dope is then discharged out of a dope discharge port, fed through a boost volumetric gear pump capable of precisely feeding a constant volume of liquid depending on number of rotation to a pressure die, cast from a nozzle (slit) of the pressure die uniformly over a metal base as a cast portion under endless running, and is separated in the state of a half-dried film (also referred to as a "web") from the metal base at a separation point where the metal base finishes about one cycle of travel. The obtained web is then pinched by clips on both edges thereof, dried under conveyance by a tenter while keeping the width unchanged, the resultant film is mechanically conveyed using a roll group of a drying apparatus to thereby complete the drying, and taken up by a winder to produce rolls with a predetermined length. Combination of the tenter and the drier having the roll group varies depending on purposes.
For an exemplary case where the produced cellulose acylate film is used for a functional protective film as an optical component of electronic displays, or for a photosensitive material of silver halide photograph, the general solvent-cast film forming apparatus is often combined with a coating apparatus, for the purpose of subjecting the film to surface treatment, such as formation of an underlying layer, antistatic layer, anti-halation layer, protective layer and the like. These techniques are detailed in Journal of Technical Disclosure (No. 2001-1745, p.25-30, issued on March 15, 2001 by JIII), as being itemized by casting (including co-casting), metal base, drying, separation or the like, all of which preferably adoptable to the present invention.

[Stretching]

The cellulose acylate film produced as described in the above may be used for predetermined applications without modification, when the film has desired optical characteristics. The film may further be stretched so as to adjust the retardation value. In particular for the case where the cellulose acylate film is expected to have a large value of in-plane retardation Re, methods of intentionally stretching the film in the width-wise direction, such as the methods stretching the manufactured film described in Japanese Laid-Open Patent Publication Nos. S62-115035, H4-152125, H4-284211, H4-298310, and H11-48271, are adoptable.
Stretching of the film is carried out under normal temperature or under heating conditions. Temperature of heating is preferably not higher than the glass transition point of the film. Stretching of the film may be uniaxial stretching only in the longitudinal or transverse direction, or may be simultaneous or sequential biaxial stretching. The film is preferably stretched by a factor of 1 to 200%, more preferably 1 to 100%, and still more preferably 1 to 50%.
The cellulose acylate film produced according to the above-described method may be used as a component of a polarizer plate, such as a protective film of a polarizer film. In some embodiments, it is necessary to align the transmission axis of the polarizer film and the in-plane slow axis of the cellulose acylate film in parallel, in order to suppress leakage of light when the obtained polarizer plate is viewed from an inclined direction. Because the transmission axis of a roll-film-type polarizer film continuously manufactured generally aligns in parallel with the width-wise direction of the roll film, for such embodiments, it is necessary to align the in-plane slow axis of the roll-film-type cellulose acylate film in parallel with the width-wise direction of the film, in order to continuously bonding the roll-film-type polarizing film and the protective film composed of the roll-film-type cellulose acylate film. Therefore, the stretching is preferably made

to a larger degree in the width-wise direction. The film may be stretched in the process of formation thereof, or the web roll, which is a film wound-up after formation, may be stretched thereafter. In the former case, the film may be stretched while containing a residual solvent, wherein the stretching is successful under a residual solvent content of 2 to 30% by mass.

Thickness of the cellulose acylate film after drying may vary depending on purposes of use, preferably in the range from 5 to 500 μm, more preferably from 20 to 300 μm, and still more preferably 30 to 150 μm. The film for optical components, in particular for VA liquid crystal display device, is preferably in the range of thickness from 40 to 110 μm. The thickness of the film may be adjusted to a desired value by appropriately adjusting solid content in the dope, slit width of the nozzle of the die, extrusion pressure from the die, travel speed of the metal base and so forth.

Thus-obtained cellulose acylate film preferably has a width of 0.5 to 3 m, more preferably 0.6 to 2.5 m, and still more preferably 0.8 to 2.2 m. The length of winding-up is preferably 100 to 10000 m per roll, more preferably 500 to 7000 m, and still more preferably 1000 to 6000 m. In the process of rolling-up, it is preferable to knurl the film on at least one edge thereof, preferably with a knurling width of 3 mm to 50 mm, more preferably 5 mm to 30 mm, and with a knurling height of 0.5 to 500 μm, and more preferably 1 to 200 μm. The knurling may be effected from one side or from both sides.

Variation in the Re (590) value of the film in the width-wise direction is preferably ±5 nm, and more preferably ±3 nm. Variation in the Rth(590) value in the width-wise direction is preferably ±10 nm, and more preferably ±5 nm. Also variations in the Re value and the Rth value in the longitudinal direction are preferably suppressed within the same range with the width-wise variation.

For the purpose of controlling the Re value and Rth value of the film composed of the composition of the present invention respectively to the desirable ranges, it is preferable to appropriately adjust the species and the amount of addition of the molecules, having predetermined groups, adsorbed to inorganic fine particles, and the stretching ratio. In particular, the film having desired Re and Rth values can be obtained, by selecting a retardation control agent capable of attaining a desired Rth value, which are to be molecules adsorbed to the inorganic fine particles, and by appropriately setting-the amount of addition of the retardation control agent and the stretching ratio so as to obtain a desired Re.

Paragraphs below will describe desirable ranges of properties of the film made from the composition of the present invention, depending on applications.

[Optical Characteristics of Film]

In this patent specification, Re(λ) and Rth(λ) represent in-plane retardation and thickness-wise retardation at wavelength λ, respectively. Re(λ) is measured using KOBRA 21ADH or WR (from Oji Scientific Instruments), by irradiating the film with a λ-nm light in the direction of normal line of the film.

For the case where the film to be measured can be expressed by a monoaxial or biaxial index ellipsoid, Rth (λ) can be calculated by the method as described below.

Rth (λ) is calculated by KOBRA 21ADH or WR is calculated based on six Re(λ) values which are measured for incoming light of a wavelength A nm in six directions which are decided by a 10° step rotation from 0° to 50° with respect to the normal direction of a sample film using an in-plane slow axis, which is decided by KOBRA 21ADH, as an a tilt axis (a rotation axis; defined in an arbitrary in-plane direction if the film has no slow axis in plane) ; a value of hypothetical mean refractive index; and a value entered as a thickness value of the film.

When a sample film gives no retardation, zero, for incoming light in the direction rotated at a certain angle with respect to the normal direction of the film using an in-plane slow axis as a rotation axis, any retardation values obtained at angles larger than that angle will be calculated by KOBRA 21ADH or WR, after being inverted in the sign to minus.

It is to be noted that Rth can be also calculated from equations (1) and (2) below, based on two retardation values measured for incoming light in two rotated directions, while assuming the slow axis as a tilt axis (a rogation axis: defined in an arbitrary in-plane direction if the film has no slow axis); a hypothetical value of the mean refractive index, and an entered value of the thickness.

Equation (1)

$$Re(\theta) = \left[ nx - \frac{ny \times nz}{\sqrt{\left\{ny \sin\left(\sin^{-1}\left(\frac{\sin(-\theta)}{nx}\right)\right)\right\}^2 + \left\{nz \cos\left(\sin^{-1}\left(\frac{\sin(-\theta)}{nx}\right)\right)\right\}^2}} \right] \times \frac{d}{\cos\left(\sin^{-1}\left(\frac{\sin(-\theta)}{nx}\right)\right)}$$

Equation (2)

$$Rth=\{(nx + ny)/2-nz\}\times d$$

Notes:

In the equation, Re(θ) represents retardation value in the direction rotated by angle θ from the direction of normal line.

In the equations, nx represents in-plane refractive index in the direction of slow axis; ny represents in-plane refractive index in the direction normal to nx; nz represents refractive index in the direction normal to nx and ny; and d is a thickness of the film.

For any films which cannot be expressed by a monoaxial or biaxial index ellipsoid, that is so-called, optic-axis-free film, Rth(λ) is calculated by the procedures below.

The Re(λ) is measured by using KOBRA-21ADH (manufactured by Oji Scientific Instruments) for an incoming light of a wavelength λ nm in a vertical direction to a film-surface. The Rth(λ) is calculated by using KOBRA-21ADH based on plural retardation values which are measured for incoming light of a wavelength λ nm in eleven directions which are decided by a 10° step rotation from -50° to + 50° with respect to the vertical direction of the film using an in-plane slow axis, which is decided by KOBRA 21ADH, as an a tilt axis (a rotation axis); value of hypothetical mean refractive index; and a value entered as a thickness value of the film.

In the above-described measurement, the hypothetical value of mean refractive index is available from values listed in catalogues of various optical films in Polymer Handbook (John Wiley & Sons, Inc.). Those having the mean refractive indices unknown can be measured using an Abbe refractometer. Mean refractive indices of some major optical films are listed below:

cellulose acylate (1.48), cycloolefin polymer (1.52), polycarbonate (1.59), polymethyl methacrylate (1.49) and polystyrene (1.59).

KOBRA 21ADH or WR calculates nx, ny and nz, upon enter of the hypothetical values of these mean refractive indices and the film thickness. Base on thus-calculated nx, ny and nz, Nz=(nx-nz)/(nx-ny) is further calculated.

The film made from the composition of the present invention may be used as an optical film for widening the viewing angle of liquid crystal display device, in particular of VA-mode liquid crystal display device. For such embodiment, the film preferably has the Re(λ) and Rth(λ) values satisfying formulae (a) and (b) below, respectively. The film is particularly preferable when used as a protective film on the liquid crystal cell side of the polarizer plate.

Formula (a): $0\ nm \leq Re(590) \leq 200\ nm$

Formula (b): $0\ nm \leq Rth(590) \leq 400\ nm$

(where, Re (590) and Rth (590) express valures at a wavelength λ of 590 nm (unit: nm).)

The values are more preferable to satisfy formulae (a-1) and (b-1) below, respectively.

Formula (a-1): $30\ nm \leq Re(590) \leq 150\ nm$

Formula (b-1): $30\ nm \leq Rth(590) \leq 300\ nm$

For the case where the film made from the composition of the present invention is employed in VA-mode device, there are two possible modes of use, one of which using the films one by one on both sides of the cell (double-film-type), and the other using a single film only on either of the upper and lower sides of the cell (single-film-type).

For the double-film-type, Re(590) is preferably 20 to 100 nm, and more preferably 30 to 70 nm, and Rth(590) is preferably 70 to 300 nm, and more preferably 100 to 200 nm.

For the single-film-type, Re(590) is preferably 30 to 150 nm, and more preferably 40 to 100 nm, and Rth(590)

is preferably 100 to 300 nm, and more preferably 150 to 250 nm.

[Moisture Permeability of Film]

The film made from the composition of the present.invention intended for use as an optical compensation sheet of liquid crystal display device preferably has a moisture permeability adjusted to 400 to 2000 g/$m^2$·24h on the 80-μm thick basis, when measured conforming to JIS Z0208 under the conditions of 60°C and 95%RH (relative humidity), adjusted more preferably to 500 to 1800 g/$m^2$. 24h, and still more preferably to 600 to 1600 g/$m^2$·24h. Adjustment to 2000 g/$m^2$·24h or below preferably makes an absolute value of moisture dependence of the Re and Rth values of the film less likely to exceed 0.5 nm/%RH. Also when the film is stacked with an optically anisotropic layer to form an optical compensation film, an absolute value of moisture dependence of the Re and Rth values desirably become less likely to exceed 0.5 nm/%RH. When the film is used for fabricating a polarizer plate by bonding it on both surfaces of a polarizer film, adjustment of the moisture permeability of the film to 400 g/$m^2$·24h or above makes an adhesive less likely to dry by virtue of the film, and thereby bonding failure becomes less likely to occur.

The moisture permeability tends to lower when the film becomes thicker, and tends to elevate when the film becomes thinner. Therefore, the moisture permeability described in the present invention is expressed as an equivalent value obtained for a film thickness of 80 μm. The calculation is made using the equation of (80-μm-equivalent moisture permeability)=(measured moisture permeability)×(measured film thickness μm/80 μm).

Moisture permeability can be measured by adopting the method described in "Kobunshi no Bussei II (Physical Properties of Polymers II", ("Kobunshi Jikken Koza 4 (Lecture Course of Polymers 4)", published by Kyoritsu Shuppann Co., Ltd.), p.285-294: Joki Toka-ryo no Sokutei (Sitsuryo-hou, Ondokei-hou, Jokiatu-hou, Kyuchakuryo hou (Measurement of Vapor Pressure (mass spectrometry, thermometer method, vapor pressure method, mass adsorption method)", wherein film samples of 70 mm in diameter were conditioned under conditions of 25°C, 90%RH and 60°C, 95%RH, respectively, for 24 hours, moisture contents per unit area (g/$m^2$) were calculated using a moisture permeation tester (Model KK-709007, from Toyo Seiki Seisaku-Sho, Ltd.) conforming to JIS Z-0208, and moisture permeability was calculated based on a relation of (moisture permeability)=(weight before conditioned under moisture)-(weight after conditioned under moisture).

[Residual Solvent Content of Film]

In the present invention, it is preferable to dry the film so as to adjust a residual solvent content of 0.01 to 1.5% by mass, and more preferably 0.01 to 1.0% by mass. For the case where the film is used as a support of an optically anisotropic layer composed of a liquid crystalline compound, curling can more effectively be suppressed by adjusting the residual solvent content in the above-described range. It is supposed that reduction in the residual solvent content during film formation by the solvent cast method may be a major effective cause for reducing the free volume.

[Coefficient of Hygroscopic Expansion of Film]

Coefficient of hygroscopic expansion of the film is preferably adjusted to $30\times10^{-5}$/%RH or below, more preferably to $15\times10^{-5}$/%RH or below, and still more preferably $10\times10^{-5}$/%RH or below. Although the lower limit is not specifically limited, and smaller coefficient of hygroscopic expansion is more preferable, wherein the film more preferably has a value of $1.0\times10^{-5}$/%RH or above. The coefficient of hygroscopic expansion herein means a change in the length of a sample, under varied relative humidity under a constant temperature. When the film is used as a support of the optical compensation film, a frame-like elevation of the transmissivity, or distortion-induced leakage of light, will be avoidable while keeping optical compensation function of the optical compensation film unchanged, by adjusting the coefficient of hygroscopic expansion.

[Surface Treatment]

It is also allowable to improve the adhesiveness of the film with the individual functional layer (for example, under-coat layer and back layer), by subjecting the film to surface treatment as requested. Grow discharge treatment, UV irradiation treatment, corona treatment, flame treatment, and acid or alkali treatment can typically be used. The grow discharge treatment referred to herein may be such as using a low temperature plasma ignited under a gas pressure of as low as $10^{-3}$ to 20 Torr, and may be a plasma treatment under the atmospheric pressure. Plasma-igniting gas means any gas capable of igniting plasma under the above-described conditions, where examples of which include argon,' helium, neon, krypton, xenon, nitrogen, carbon dioxide, fluorocarbon gases such as tetrafluoromethane, and mixtures thereof. These are detailed in Journal of Technical Disclosure (No. 2001-1745, p'. 30-32, issued on March 15, 2001 by JIII), and can preferably be used in the present invention.

[Alkali Saponification]

Alkali saponification is preferably carried out by a method of directly immersing the film into a bath of saponification solution, or a method of coating a saponification solution onto the film. Examples of the method of coating include dip coating, curtain coating, extrusion coating, bar coating and E-type coating. Solvent used for the alkali saponification is preferably selected from those having an excellent wettability in view of coating the saponification solution onto the film, and being capable of keeping the surface condition desirable, without producing irregularity on the film surface induced by a saponification solvent. More specifically, alcoholic solvent is preferable, and isopropyl alcohol is particularly preferable. Also an aqueous solution of surfactant can be used as the solvent. Alkali in the coating liquid for alkali saponification is preferably the one soluble to the above-described solvent, wherein KOH and NaOH are still more preferable. pH of the coating liquid for saponification is preferably 10 or above, and more preferably 12 or above. Reaction conditions for the alkali saponification are preferably such as under room temperature for 1 second to 5 minutes, more preferably for 5 seconds to 5 minutes, and still more preferably for 20 seconds to 3 minutes. After the alkali, saponification reaction, it is preferable to wash the surface once having the saponification solution coated thereto, using water or an acid, and then further washed with water.

[Functional Layers]

The film made of the composition of the present invention is suitable for optical applications and photographic photo-sensitive materials. In particular in optical applications, the film is preferably used as components of liquid crystal display device, wherein the liquid crystal display device is preferably configured by a liquid crystal cell having a liquid crystal held between two electrode substrates, two polarizer element disposed on both sides thereof, and at least one optical compensation sheet disposed between the liquid crystal cell and the polarizer element. The liquid crystal display device is preferably any of TN, IPS, FLC, AFLC, OCB, STN, ECB, VA and HAN.

The film-intended for use in the above-described optical applications is preferably provided with various functional layers. The functional layers typically include anti-static layer, hardening layer (transparent hard coat layer), anti-reflection layer, adhesion facilitating layer, anti-glare layer, optical compensation layer, alignment layer, liquid crystal layer and so forth. Examples of these functional layers and materials therefor include surfactant, lubricant, matting agent, antistatic layer, and hard coat layer, all of which being detailed in Journal of Technical Disclosure (No. 2001-1745, p. 32-45, issued on March 15, 2001 by JIII), and preferably applicable to the present invention.

[Applications (Polarizer Plate)]

Applications of the film made from the Composition of the present invention will be explained below.

The films made from the composition of the present invention, in particular cellulose film, are useful as a protective film of a polarizing plate. There is no special limitation on methods of producing a polarizer plate comprising the film made from the composition as a protective film, and it may be produced.according to any general method. One known method is such as subjecting the obtained film (preferably cellulose film) to alkali treatment, - and bonding it on both surfaces of a polarizer film, which is produced by stretching a polyvinyl alcohol film after being immersed into an iodine solution, using an aqueous solution of a completely saponified polyvinyl alcohol. It is also allowable to adopt, in place of the alkali treatment, adhesion facilitating treatments such as described in Japanese Laid-Open Patent Publication Nos. H6-94915 and No.H6-118232.

Examples of the adhesive used for bonding the treated surface of the protective film to the polarizer film include polyvinyl alcohol-base adhesive such as polyvinyl alcohol and polyvinyl butyral; and vinyl-base latex such as butyl acrylate.

The polarizer plate is composed of a polarizer film and protective films protecting both surfaces thereof, or can be configured by bonding a protective film on one surface of the polarizer plate, and by bonding a separation film on the opposite surface. The protective film and the separation film are used for protecting the polarizer plate in the process of shipping thereof, product inspection and so forth. In this case, the protection film is bonded for the purpose of protecting the surface of the polarizer plate, and is provided on the side opposite to the surface to be bonded to the liquid crystal plate. The separate film is used for the purpose of covering the adhesive layer adhered to the liquid crystal plate, and is used on the side of the surface to be bonded to the liquid crystal plate.

The liquid crystal display device generally has a substrate containing a liquid crystal, placed between two polarizer plates, wherein placement of the polarizer plate protective film adopting the above-described film at any positions can ensure excellent display performance. In particular, the polarizing plate protective film composing the topmost surface on the viewing side of the liquid crystal display device is provided with a transparent hard coat layer, anti-glare layer, anti-reflection layer and so forth, so that it is particularly preferable to use the polarizing plate protective film in this portion.

[Applications (Optical Compensation Film)]

The film made from the composition of the present invention can be used in various applications, and is particularly effective when used as an optical compensation film of liquid crystal display device. The optical compensation film herein means an optical material generally employed in liquid crystal display devices so as to compensate retardation, and is synonymous with retardation plate, optical compensation sheet and so forth. The optical compensation film has birefringence, and is used for the purpose of eliminating coloration of the display screen of the liquid crystal display device, and of improving the viewing angle characteristics.

[Liquid Crystal Display Device]

The film (preferably cellulose film) made from the composition of the present invention intended for use as an optical compensation film allows arrangement of the transmission axis of the polarizer film and the slow axis of the film at any angles. The liquid crystal display device is generally configured by a liquid crystal cell having a liquid crystal held between Two electrode substrates, two polarizer films dispose on both sides thereof, and at least one optical compensation film disposed between the liquid crystal cell and the polarizer film. The film made from the composition of the present invention may be incorporated as the optical compensation film, or may be incorporated as a protective film of the polarizer film.

A liquid crystal layer of the liquid crystal cell is generally formed by injecting a liquid crystal into a space formed between two substrates holding spacers in between. A transparent electrode layer is formed on each of the substrates, as a transparent layer containing an electro-conductive substance. The liquid crystal cell can further be provided with a gas barrier layer, a hard coat layer, or an under-coat layer (used for adhering the transparent electrode layer). These layers are generally provided on the substrates. Each of the substrates of the liquid crystal cell preferably has a thickness of 50 $\mu$m to 2 mm.

The film made of the composition of the present invention can be used as optical components (for example, optical compensation film, protective film for polarizer film, etc.) of liquid crystal display devices of various display modes. Specific examples of the display mode include TN (twisted nematic), IPS (in-plane switching), FLC (ferroelectric liquid crystal), AFLC (anti-ferroelectric liquid crystal), OCB (optically compensatory bend), STN (super twisted nematic), VA (vertically aligned), ECB (electrically controlled birefringence), and HAN (hybrid aligned nematic). The display modes can be used also in a multi-domain display mode. The film can preferably be used also in any of the liquid crystal display devices of transmission type, reflection type and semi-transmission type.

(TN-Type Liquid Crystal Display Device)

The film (preferably cellulose acylate film) made from the composition of the present invention may be used as an optical compensation sheet of TN-type liquid crystal display device having a TN-mode liquid crystal cell, as a support of a part thereof, or as a protective film for the polarizer plates. The TN-mode liquid crystal cell and the TN-type liquid crystal display device are well known for a long time. The optical compensation sheet used for the TN-mode liquid crystal display device can be produced according to the description in Japanese Laid-Open Patent Publication Nos. H3-9325, H6-148429 and H9-26572. The sheet can be produced also according to the descriptions by Mori et al., (Jpn. J. Appl. Phys. , Vol.36 (1997), p.143, and Jpn. J. Appl. Phys., Vol. 36 (1997), p.1068).

(STN-Type Liquid Crystal Display Device)

The film (preferably cellulose acylate film) made from the composition of the present invention may be used as an optical compensation sheet of STN-type liquid crystal display device having an STN-mode liquid crystal cell, as a support of a part thereof, or as a protective film for the polarizer plates. The STN-type liquid crystal display device generally has rod-like liquid crystalline molecules twisted in the range from 90 to 360° in the liquid crystal cell, wherein the product ($\Delta$nd) of the refractive index anisotropy ($\Delta$n) of the rbd-like liquid crystalline molecules and the cell gap (d) falls in the range from 300 to 1500 nm. The optical compensation sheet used for the STN-type liquid crystal display device can be produced according to the description in Japanese Laid-Open Patent Publication No. 2000-105316.

(VA-Type Liquid Crystal Display Device)

The film (preferably cellulose acylate film) made from the composition of the present invention may be used as an optical compensation sheet of VA-type liquid crystal display device having a VA-mode liquid crystal cell, as a support of a part thereof, or as a protective film for the polarizer plates. The Re value of the optical compensation sheet used for the VA-type liquid crystal display device is preferably adjusted to 0 to 150 nm, and the Rth value is preferably

adjusted to 70 to 400 nm. For the case where two sheets of optically anisotropic polymer film are used for the VA-type liquid crystal display device, the Rth value of the film is preferably 70 to 250 nm. For the case where a single optically anisotropic polymer film is used for the VA-type liquid crystal display device, the Rth value of the film is preferably 150 to 400 nm. The VA-type liquid crystal display device may be of multi-domain system, as described typically in Japanese Laid-Open Patent Publication No. H10-123576.

(IPS-Type Liquid Crystal Display Device and ECB-Type Liquid Crystal Display Device)

The film (preferably cellulose acylate film) made from the composition of the present invention may be used as an optical compensation sheet of IPS-type and ECB-type liquid crystal display devices respectively having an IPS-mode and ECB-mode liquid crystal cells, as a support of a part thereof, or as a protective film for the polarizer plates. These modes are characterized by near-parallel alignment of the liquid crystal material in the black state, wherein the black state is attained by aligning the liquid crystal molecules in parallel with the substrate surface under no applied voltage. In these modes, the polarizer plate using the film contributes to the improving hue, widening viewing angle, and improving contrast. In these modes, of the protective films of the polarizer plates disposed on the upper and lower sides of the liquid crystal cell, the film made of the composition of the invention is preferably used as a protective film which is disposed between the liquid crystal cell and at least one of the polarizer plates (that is, the protective film on the cell side). It is more preferable to dispose an optically anisotropic layer between the protective film of the polarizer plate and the liquid crystal cell, and to adjust the retardation value of thus-disposed optically anisotropic layer to as large as twice or less of $\Delta n \cdot d$ of the liquid crystal layer.

(OCB-Type Liquid Crystal Display Device and HAN-Type Liquid Crystal Display Device)

The film (preferably cellulose acylate film) made of the composition of the present invention may advantageously be used as an optical compensation sheet of OCB-type and HAN-type liquid crystal display devices respectively having an OCB-mode and HAN-mode liquid crystal cells, as a support of a part thereof, or as a protective film for the polarizer plates. The optical compensation sheet used for the OCB-type liquid crystal display device or the HAN-type liquid crystal display device preferably has no direction showing a minimum absolute value of the retardation value, neither in the in-plane direction nor in the direction of normal line of the optical compensation sheet. Also optical characteristics of the optical compensation sheet used for the OCB-type liquid crystal display device or the HAN-type liquid crystal display device are determined depending on the optical characteristics of the optically anisotropic layer, optical characteristics of the support, and arrangement of the optically anisotropic layer and the support. The optical compensation sheet used for the OCB-type liquid crystal display device or the HAN-type liquid crystal display device can be produced according to the description in Japanese Laid-Open Patent Publication No. H9-197397. The sheet can be produced also according to the descriptions by Mori et al., (Jpn. J. Appl. Phys. , Vol. 38 (1999), p.2837).

(Reflection-Type Liquid Crystal Display Device)

The film (preferably cellulose acylate film) made from the composition of the present invention can advantageously be used typically as an optical compensation sheet for reflection-type liquid crystal display device of TN-type, STN-type, HAN-type and GH (guest-host)-type. These display modes are well known for'a long time. TN-type reflection liquid crystal display device can be produced according to the descriptions in Japanese Laid-Open Patent Publication No. H10-123478, International Publication Pamphlet No. WO98/48320, and Japanese Patent Publication No. 3022477. The optical compensation sheet used for the reflection-type liquid crystal display device can be produced according to the description in International Publication Pamphlet No. WO00/65384.

(Other Liquid Crystal Display Device)

The film (preferably cellulose acylate film) made from the composition of the present invention is advantageously used also as an optical compensation sheet or the like for ASM-type liquid crystal display device having an ASM ('axially symmetric aligned microcell)-mode liquid crystal cell. The ASM-mode liquid crystal cell is **characterized in that** the thickness of the cell is maintained by position-adjustable resin spacers. Other properties are same as those of the TN-mode liquid crystal cell. The ASM-mode liquid crystal cell and the ASM-type liquid crystal display device can be produced according to the description in Kume et al., SID 98 Digest 1089 (1998).

(Hard-Coat Film, Anti-glare Film and Anti-Reflection Film)

The film (preferably cellulose acylate film) made from the composition of the present invention may be used

as a hard-coat film, anti-glare film or anti-reflection film. For the purpose of improving visibility of flat panel displays such as LCD, PDP, CRT, EL and so forth, any one of, or all of the hard-coat layer, antiglare layer and anti-reflection layer can be provided on one side or both sides of the film. Desirable embodiments as such anti-glare film and anti-reflection film are described in detail in Journal of Technical Disclosure (No. 2001-1745, p.54-57, issued on March 15, 2001 by JIII), and the above-described films are preferably applicable thereto.

The composition of the present invention is used for producing not only display materials, but also opto-electronics materials and photonics materials, without limited to the above-described applications.

## Examples

The invention will be further specifically described below with reference to the following Examples. Materials, reagents, amounts and proportions thereof, operations, and the like as shown in the following Examples can be properly changed so far as the gist of the invention is not deviate. Accordingly, it should not be construed that the scope of the invention is limited to the following specific examples.

### [Example 1]

(Preparation of Needle-Like Titanium Dioxide Fine Particles)

Needle-like titanium dioxide fine particles were prepared according to the method described in J. Am. Chem. Soc., Vol. 125, p.10518, 2003 (sol-gel process). Particle size and aspect ratio of the fine particles were determined based on results of observation under a transmission electron microscope (TEM). The particle size and the aspect ratio were found'to be 300 nm and 5, respectively.

### [Example 2]

(Preparation of Anisotropic Carbonate Fine Particles)

One thousand milliliters (water 600 mL, methanol 400 mL) of a 0. 2-mol/L strontium hydroxide suspension as a metal ion source was mixed with 600 mL of a 0.1-mol/L aqueous ammonium carbonate solution as a carbonate source under stirring, and allowed to react. pH of the reaction solution was 12.7.

Next, a carbon dioxide gas as a carbonate source was supplied excessively to the metal ion source, while keeping the reaction solution stirred, to thereby form a white precipitate in the reaction solution.

The reaction solution was filtered and washed sufficiently with water. The obtained precipitate was dried, pulverized in a mellow bowl. And then strontium carbonate crystal T-1 was obtained as anisotropic inorganic fine particles. Particle size and aspect ratio of the fine particles were determined based on results of observation under a transmission electron microscope (TEM). The particle size and the aspect ratio were found to be 300 nm and 5, respectively.

### [Example 3]

(Preparation 1 of Inorganic Fine Particles Having Adsorbed thereto Molecules with Predetermined Groups)

As retardation control agents listed as sample Nos.4 to 8 in Table 1, an equal mass of inorganic fine particles (needle-like $TiO_2$ with an aspect ratio 5, formed in Example 1), and a compound having the adsorptive groups to the inorganic fine particles and a group capable of forming a liquid crystal core, or a compound further having a substitutive group exhibiting an affinity for the polymer material (Exemplified Compound C-1, C-4, or C-11) were dispersed into 100 parts by volume of methanol, and the mixture was sonificated for 30 minutes. The obtained dispersion was concentrated under reduced pressure so as to remove the solvent, to thereby obtain the inorganic fine particles having adsorbed thereto the molecules of the above-described respective compounds. Presence or absence of the molecules of the compounds was confirmed by UV-visible absorption spectrometry.

(Preparation 2 of Inorganic Fine Particles Having Adsorbed thereto Molecules with Predetermined Groups)

As retardation control agents listed as sample Nos. 9 and 10 in Table 1, an equal mass of inorganic fine particle (needle-like $TiO_2$ with an aspect ratio 5, formed in Example 1), and a compound having the adsorptive groups to the inorganic fine particles and a group capable of forming a liquid crystal core, or a compound further having a substitutive group exhibiting an affinity for the polymer material (Exemplified Compound C-51) were dispersed into 100 parts by volume of methanol, and the mixture was sonificated for 30 minutes. The obtained dispersion was concentrated under

reduced pressure so as to remove the solvent, to thereby obtain the inorganic fine particles having adsorbed thereto the molecules of the above-described compound. Presence or absence of the molecules of the compounds was confirmed by UV-visible absorption spectrometry.

(Preparation 1 of Cellulose Acetate Film)

The ingredients shown below were placed in a mixing tank, stirred under heating to dissolve the ingredients in the solvent, to thereby prepare a cellulose acetate solution.

(Composition of Cellulose Acetate Solution)

| | |
|---|---|
| Cellulose acetate with a degree of acylation of 60.9% (degree of polymerization: 300) | 100 parts by mass |
| Triphenyl phosphate (plasticizer) | 7:8 parts by mass |
| Biphenyldiphenyl phosphate (plasticizer) | 3.9 parts by mass |
| Methylene chloride (first solvent) | 318 parts by mass |
| Methanol (second solvent) | 47 parts by mass |

In another mixing tank, each of the retardation control agents listed in Table 1, 87 parts by mass of methylene chloride, and 13 parts by mass of methanol were placed, and stirred under heating, to thereby prepare the each retardation control agent solution.

Thirty-six parts by mass of each retardation control agent solution was gradually added with 474 parts by mass of the cellulose acetate solution, mixed, and thoroughly stirred to thereby prepare a dope. Each retardation control agent solution was prepared such that the amount (parts by mass) of the retardation control agent per 100 parts by mass of cellulose acetate is the amount listed in Table 1.

Each of thus-obtained dopes was cast on a surface using a band casting machine. The film having a residual solvent content of 15% by mass was transversely stretched by a stretching ratio of 15% under 160°C using a tenter, to thereby produce a cellulose acetate film (92 μm thick). Re(590) and Rth(590) values of thus-produced cellulose acetate films were measured at 590 nm, according to the method described in the above. Results are shown in Table 1. It is to be noted that Film No. 1 in Table 1 is a cellulose acetate film produced similarly thereto, except that the retardation control agent solution was not added. Amount of addition for Film Nos. 4 to 10 in Table 1 is the amount of addition of the needle-like $TiO_2$ having adsorbed thereto molecules of the each organic compound.

Table 1

| No. | Retardation Control Agent | Amount of Addition (mass parts) | Re(590) (nm) | Rth(590) (nm) | Note |
|---|---|---|---|---|---|
| 1 | None | 0 | 2 | 30 | Comparative Example |
| 2 | Comparative Compound (1) | 2 | 15 | 97 | Comparative Example |
| 3 | Comparative Compound (1) | 5 | 38 | 180 | Comparative Example |
| 4 | Exemplified Compound C-1/ Needle-like fine particles of $TiO_2$ | 2 | 75 | 140 | Invention |
| 5 | Exemplified Compound C-1/ Needle-like fine particles of $TiO_2$ | 3.5 | 132 | 224 | Invention |

(continued)

| No. | Retardation Control Agent | Amount of Addition (mass parts) | Re(590) (nm) | Rth(590) (nm) | Note |
|---|---|---|---|---|---|
| 6 | Exemplified Compound C-4 / Needle-like fine particles of $TiO_2$ | 2 | 77 | 150 | Invention |
| 7 | Exemplified Compound C-4 / Needle-like fine particles of $TiO_2$ | 3.5 | 135 | 225 | Invention |
| 8 | Exemplified Compound C-11 / Needle-like fine particles of $TiO_2$ | 2 | 70 | 270 | Invention |
| 9 | Exemplified Compound C-51/ Needle-like fine particles of $TiO_2$ | 2 | 115 | 205 | Reference Example |
| 10 | Exemplified Compound C-51 / Needle-like fine particles of $TiO_2$ | 3.5 | 155 | 295 | Reference Example |
| 11 | Exemplified Compound C-1 | 2 | 17 | 40 | Comparative Example |
| 12 | Exemplified Compound C-4 | 2 | 18 | 41 | Comparative Example |
| 13 | Exemplified Compound C-11 | 2 | 15 | 105 | Comparative Example |
| 14 | Exemplified Compound C-51 | 2 | 19 | 43 | Comparative Example |

Comparative Compound (1)

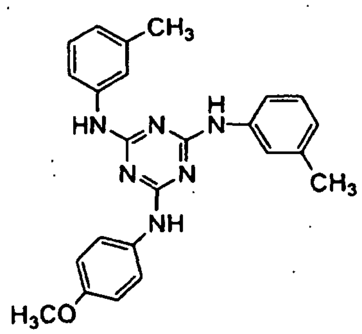

Although the preparation of a film by using the needle-like fine particles of $TiO_2$ without adsorption of the compound having predetermined groups was also tried, it was not successful due to poor dispersion into the dope.

From the results shown in Table 1, it is understandable that Examples (Nos. 4 to 10) of the present invention were found to be superior over the Comparative Example in view of enhancing effect for Re(590) and Rth(590) of the

obtained films. In particular, the films added with-the needle-like $TiO_2$ treated with the compound having the group represented by the formula (3) as the adsorptive groups (Nos. 9 and 10) showed a distinctive superiority.

[Example 4]

(Preparation 2 of Inorganic Fine Particles Having Adsorbed thereto Molecules with Predetermined Groups -3 and Preparation of Cellulose Acetate Film)

The molecule-adsorbed inorganic fine particles were prepared using the inorganic fine particles as same as those used in Example 3 and the exemplified compounds below.

More specifically, the inorganic fine particles having adsorbed thereto molecules of the predetermined Exemplified Compound were prepared similarly to as described in Example 3, except that Exemplified Compound C-16 or C-19 shown in Table 2 was used as the compound having adsorptive groups to the inorganic fine particles and a group capable of forming a liquid crystal core, or as the compound further having a substitutive group showing affinity to the polymer materials..

Each composition was then prepared by mixing each of the molecule-adsorbed inorganic fine particles and cellulose acetate, so that the amount of the molecule-adsorbed inorganic fine particles (retardation control agent) per 100 parts by mass of cellulose acetate was adjusted to the amount listed in Table 2, and a cellulose acetate film (92 μm thick) was produced similarly to as described in Example 3, except that the film was not transversely stretched at 160°C.

Re(590) and Rth(590) values at 590 nm of thus-produced cellulose acetate films were measured according to the method described in the above. Results are shown in Table 2. It is to be noted that Film No. 1 in Table 2 is a cellulose acetate film produced similarly thereto, except that the retardation control agent solution was not added. Amount of addition for Film Nos. 2 and 3 in Table 2 is the amount of addition of the needle-like $TiO_2$ having adsorbed thereto each organic compound.

Table 2

| No. | Retardation Control Agent | Amount of Addition (mass parts) | Re(590) (nm) | Rth(590) (nm) | Note |
|---|---|---|---|---|---|
| 1 | None | 0 | 3 | 85 | Comparative Example |
| 2 | Exemplified Compound C-16 / Needle-like fine particles of $TiO_2$ | 1 | 4 | 145 | Invention |
| 3 | Exemplified Compound C-19 / Needle-like fine particles of $TiO_2$ | 1 | 6 | 155 | Invention |
| 4 | Exemplified Compound C-16 | 1 | 4 | 98 | Comparative Example |
| 5 | Exemplified Compound C-19 | 1 | 5 | 106 | Comparative Example |

Although the preparation of a film by using the needle-like fine particles of $TiO_2$ without adsorption of the compound having predetermined groups was also tried, it was not successful due to poor dispersion into the dope.

From the results shown in Table 2, it is understandable that Examples (Nos. 2 and 3 in Table 2) of the present invention were superior over the Comparative Example in view of enhancing effect for Rth(590) of the obtained films.

[Example 5]

(Preparation 4 of Inorganic Fine Particles Adsorbed- thereto Molecules Having a Predetermined Group)

As retardation control agents listed as sample Nos. 3 to 8 in Table 3, the inorganic fine particles (needle-like $TiO_2$ with an aspect ratio 5) prepared by the method described in Example 2, and a compound having the adsorptive groups to the inorganic fine particles and a group capable of forming a liquid crystal compound, or a compound further

having a substitutive group exhibiting an affinity for the polymer material (Exemplified Compound C-4, C-5, C-31, C-36, C-41 or C-44) were dispersed into 100 parts by volume of methanol, with a ratio of the inorganic fine particles and the compound of 100:5 in parts by mass, and the mixture was sonificated for 30 minutes. The obtained dispersion was concentrated under reduced pressure so as to remove the solvent, to thereby obtain the inorganic fine particles having adsorbed thereto the molecules of each compound described above. Presence or absence of the molecules of the compounds was confirmed by UV-visible absorption spectrometry.

(Preparation 3 of Cellulose Acetate Film)

Dopes respectively containing the cellulose acetate solution and retardation control agents listed in Table 3 were prepared, similarly to as described in Example 3. Each of thus-obtained dopes was cast on a surface using a band casting machine, and a cellulose acetate film (80 μm thick) was produced without transverse stretching at 160°C. Re (590) and Rth(590) values at 590 nm of thus-produced cellulose acetate films were measured according to the method described in the above. Results are shown in Table 3. It is to be noted that Film No. 1 in Table 3 is a cellulose acetate film produced similarly thereto, except that the retardation control agent solution was not added. Amount of addition for Film Nos. 3 to 8 in Table 3 is the amount of addition of the needle-like $SrCO_3$ having adsorbed thereto each organic compound.

Table 3

| No. | Retardation Control Agent | Amount of Addition (mass parts) | Re(590) (nm) | Rth(590) (nm) | Note |
|---|---|---|---|---|---|
| 1 | None | 0 | 3 | 85 | Comparative Example |
| 2 | Comparative Compound (2) | 11.7 | 4 | 56 | Comparative Example |
| 3 | Exemplified Compound C-4/ Needle-like fine particles of $SrCO_3$ | 3 | 6 | 54 | Invention |
| 4 | Exemplified Compound C-5/ Needle-like fine particles of $SrCO_3$ | 3 | 4 | 58 | Invention |
| 5 | Exemplified Compound C-31/ Needle-like fine particles of $SrCO_3$ | 3 | 5 | 47 | Invention |
| 6 | Exemplified Compound C-36/ Needle-like fine particles of $SrCO_3$ | 3 | 6 | 47 | Invention |
| 7 | Exemplified Compound C-41/ Needle-like fine particles of $SrCO_3$ | 3 | 6 | 46 | Invention |
| 8 | Exemplified Compound C-44/ Needle-like fine particles of $SrCO_3$ | 3 | 4 | 48 | Invention |
| 9 | Exemplified Compound C-4 | 3 | 8 | 95 | Comparative Example |
| 10 | Exemplified Compound C-5 | 3 | 7 | 99 | Comparative Example |

(continued)

| No. | Retardation Control Agent | Amount of Addition (mass parts) | Re(590) (nm) | Rth(590) (nm) | Note |
|---|---|---|---|---|---|
| 11 | Exemplified Compound C-31 | 3 | 8 | 96 | Comparative Example |
| 12 | Exemplified Compound C-36 | 3 | 8 | 97 | Comparative Example |
| 13 | Exemplified Compound C-41 | 3 | 7 | 98 | Comparative Example |
| 14 | Exemplified Compound C-44 | 3 | 9 | 97 | Comparative Example |

Comparative Compound (2)

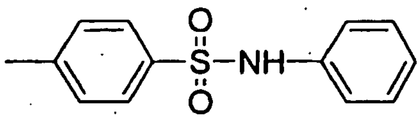

Although the preparation of a film by using the needle-like fine particles of $SrCO_3$ without adsorption of the compound having predetermined groups was also tried, it was not successful due to poor dispersion into the dope.

From the results shown in Table 3, it is understandable that Examples (Nos. 3 to 8) of the present invention were superiority over the Comparative Example in viewing of suppressive effect for Rth(590), further in viewing of suppressive effect per an amount, [Example 6]

(Preparation of Cyclic polyolefin P-1)

Cyclic polyolefin P-1 (Mw=88,000) was produced according to the method described in Makromol. Chem., vol. 193, pp. 2915, 1992. The Mw, weight-average molecular weigh, was measured with a GPC analyzer provided with TSK Gel GMHxL, TSK Gel G4000 HxL and TSK Gel G2000 HxL, which are trade name for products of TOSOH, using THF as a solvent and using a differential refractometer as a detector, and was expressed as a polystyrene-equivalent Mw.

Cyclic Polyolefin P-1

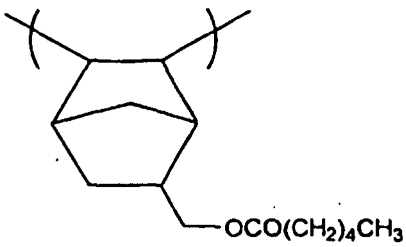

(Preparation 1 of Cyclic Polyolefin Film)

The ingredients shown below were placed in a mixing tank, stirred under heating to dissolve the individual ingredients, to thereby prepare a cellulose acetate solution.

(Composition of Cyclic Polyolefin Solution)

| | |
|---|---|
| Cyclic Polyolefin (Mw=88,000) | 100 parts by mass |
| Methylene chloride | 400 parts by mass |

The obtained dope was cast on a surface.using a band casting machine. The film having a residual solvent content of 10% by mass was transversely stretched by a stretching ratio of 25% under 140°C using a tenter, to thereby produce a cyclic polyolefin film (80 μm thick). Re(590) and Rth(590) values of the obtained cyclic polyolefin films were measured at 590 nm, according to the method described in the above. Results are.shown in Table 4 as Sample No. 1.

(Preparation 2 of Cyclic Polyolefin Film)

As retardation control agents listed as sample Nos. 3 to 6 in Table 4, inorganic fine particles adsorbed thereto molecules having predetermined groups were prepared as follows.

The inorganic fine particles (needle-like $SrCO_3$ with an aspect ratio 5) prepared by the method described in Example 2, and a compound having the adsorptive groups to the inorganic fine particles and a group capable of forming a liquid crystal compound, or a compound further having a substitutive group exhibiting an affinity for the polymer material (Exemplified Compound C-4, C-10, C-31 or C-44) were dispersed into 100 parts by volume of methanol, with a ratio of the inorganic fine particles and the compound of 100:5 in parts by mass, and the mixture was sonificated for 30 minutes. The obtained dispersion was concentrated under reduced pressure so as to remove the solvent, to thereby obtain the inorganic fine particles having adsorbed thereto the molecules of each compound described above. Presence or absence of the molecules of the compounds was confirmed by UV-visible absorption spectrometry.

Cyclic polyolefin films (80 μm thick) were produced in the same manner of Preparation 1 of Cyclic Polyolefin Film, except that each dope was prepared by adding inorganic fine particles (retardation control agent) to the cyclic polyolefin solution so that the amount of each retardation control agent with respect to 100 mass parts of cyclic polyolefin was adjusted to the value shown in Table 4. Re(590) and Rth(590) values of each obtained cyclic polyolefin film were measured at 590 nm, according to the method described in the above. Results are shown in Table 4.

(Preparation 3 of Cyclic Polyolefin Film)

Cyclic polyolefin films (80 μm thick) were produced in the same manner of Preparation 1 of Cyclic Polyolefin Film, except that each dope was prepared by adding Exemplified Compound C-4, C-10, C-31 or C-44 to the cyclic polyolefin solution so that the amount of each compound with respect to 100 mass parts of cyclic polyolefin was adjusted to the value shown in Table 4 as Sample Nos. 2 and 7 to 10. Re (590) and Rth (590) values of each obtained cyclic polyolefin film were measured at 590 nm, according to the method described in the above. Results are shown in Table 4.

Table 4

| No. | Retardation Control Agent | Amount Addition (mass parts) | of Re(590) (nm) | Rth(590) (nm) | Note |
|---|---|---|---|---|---|
| 1 | None | 0 | 245 | 190 | Comparative example |
| 2 | Comparative Compound (2) | 11.7 | 275 | 120 | Comparative example |
| 3 | Exemplified Compound C-4/ Needle-like fine particles of $SrCO_3$ | 3 | 10 | 115 | Invention |
| 4 | Exemplified Compound C-10/ Needle-like fine particles of $SrCO_3$ | 3 | 13 | 117 | Invention |

(continued)

| No. | Retardation Control Agent | Amount Addition (mass parts) | of Re(590) (nm) | Rth(590) (nm) | Note |
|---|---|---|---|---|---|
| 5 | Exemplified Compound C-31/ Needle-like fine particles of $SrCO_3$ | 3 | 7 | 110 | Invention |
| 6 | Exemplified Compound C-44/ Needle-like fine particles of $SrCO_3$ | 3 | 8 | 110 | Invention |
| 7 | Exemplified Compound C-4 | 3 | 285 | 212 | Comparative example |
| 8 | Exemplified Compound C-10 | 3 | 288 | 210 | Comparative example |
| 9 | Exemplified Compound C-31 | 3 | 280 | 214 | Comparative example |
| 10 | Exemplified Compound C-44 | 3 | 282 | 211 | Comparative example |

From the results shown in Table 4, it is understandable that Examples (Nos. 3 to 6) of the present invention were superiority over the Comparative Example in viewing of suppressive effect for Rth(590), further in viewing of suppressive effect per an amount,

It is understandable from these results that, by using a polymer composition added with the inorganic fine particles having adsorbed thereto molecules of an organic compound having the adsorptive group to the inorganic fine particles and a group capable of forming a liquid crystal core, and more preferably molecules of an organic compound further having a substitutive group exhibiting an affinity for the polymer material, cellulose acylate films having Re (590) and Rth (590) adjusted to larger values, which could not have been achieved by any films produced by using a polymer composition added with no such inorganic fine particles, by using a polymer composition added with discotic compounds (Comparative Compounds (1) and (2)) which are publicly-known retardation control agents, nor by using a polymer composition having such organic compound added in a state not adsorbed to inorganic fine particles, can be produced.

And it is also understandable that the retardation control agent of the invention, or, in other words, inorganic fine particles adsorbed thereto molecules having predetermined groups, have a good suppressive effect on Rth of cellulose acylate films or cyclic polyolefin films.

Industrial Applicability

As has been described in the above, the composition of the present invention can be used in producing films. And the films made of the composition can be used as an optical film for liquid crystal display device, in particular as an optical compensation sheet.

## Claims

**1.** A composition comprising, at least,
a polymer material and
inorganic fine particles having adsorbed thereto molecules having at least one adsorptive group to the inorganic fine particle and a group capable of forming a liquid crystal core
wherein said adsorbed molecules are liquid crystal molecules;
said inorganic fine particles are shape-anisotropic fine particles; and
said at least one adsorptive group is selected from the group consisting of COOH group and the salts thereof, OH group, $SO_3H$ group, amino group, oxime, dioxime, hydroxyquinoline, chelating group and the groups represented by formula (1) and (2):

Formula (1) $-PO_3X_m$

Formula (2) $-OPO_3X_m$

wherein each X independently represents a hydrogen atom or a mono- or divalent organic or inorganic cation, m is an integer of 1 or 2, provided that X is a divalent organic or inorganic cation if m is 1, and that two X's individually represent a hydrogen atom or a monovalent organic or inorganic cation if m is 2.

**2.** The composition of claim 1, wherein said adsorbed molecules are liquid crystal molecules having a group represented by a formula (I) below:

Formula (I)

$$-Cy^1-L^1-(Cy^2-L^2)_m-Cy^3-$$

where $L^1$ and $L^2$ respectively represent a single bond of a divalent linking group; $Cy^1$,$Cy^2$ and $Cy^3$ respectively represent a divalent cyclic group, and m is an integer from 0 to 2.

**3.** The composition of claim 1 or 2 , wherein said at least one adsorptive group is a carboxyl group (-COOH) or a salt thereof.

**4.** The composition of claim 1 or 2 , wherein said at least one adsorptive group is a phosphonic acid group represented by a formula (1) below or a salt thereof, or a phosphonic monoester group represented by a formula (2) below or a salt thereof:

Formula (1) $-PO_3X_m$

Formula (2) $-OPO_3X_m$

where, each X represents a hydrogen atom or a mono- or divalent organic or inorganic cation, m is an integer of 1 or 2, provided that X is a divalent organic or inorganic cation if m is 1, and that two X's are respectively hydrogen atoms or monovalent organic or inorganic cations if m is 2.

**5.** The composition of claims 1 to 4, wherein said inorganic fine particles are birefringent fine particles.

**6.** The composition of any one of claims 1 to 5, wherein said inorganic fine particles are metal oxide fine particles.

**7.** The composition of any one of claims 1 to 5, wherein said inorganic fine particles are strontium carbonate fine particles.

**8.** The composition of any one of claims 1 to 7, wherein said polymer material is a cellulose acylate-base polymer.

**9.** The composition of any one of claims 1 to 4, wherein said adsorbed molecules are rod-like molecules.

**10.** A film made of a composition as set forth in any one of claims 1 to 9.

**11.** The film of claim 10, being further stretched.

**12.** A process for producing an optical film comprising preparing a composition comprising a composition as set forth in any one of claims 1 to 9, and producing a film made of the composition.

**13.** An agent for controlling retardation for polymer film consisting of inorganic fine particles having adsorbed thereto molecules having at least one adsorptive group to the inorganic fine particle and a group capable of forming a core portion of a liquid crystal compound.
wherein said adsorbed molecules are liquid crystal molecules;
said inorganic fine particles are shape-anisotropic fine particles; and

said at least one adsorptive group is selected from the group consisting of COOH group and the salts thereof, OH group, $SO_3H$ group, amino group, oxime, dioxime, hydroxyquinoline, chelating group and the groups represented by formula (1) and (2) :

Formula (1) $-PO_3X_m$

Formula (2) $-OPO_3X_m$

wherein each X independently represents a hydrogen atom or a mono- or divalent organic or inorganic cation, m is an integer of 1 or 2, provided that X is a divalent organic or inorganic cation if m is 1, and that two X's individually represent a hydrogen atom or a monovalent organic or inorganic cation if m is 2.

**Patentansprüche**

1. Zusammensetzung, umfassend mindestens
ein Polymermaterial und
anorganische feine Partikel mit darauf adsorbierten Molekülen mit mindestens einer an den anorganischen feinen Partikeln adsorptiven Gruppe und einer Gruppe, die geeignet ist, einen Flüssigkristallkern zu bilden, worin die adsorbierten Moleküle Flüssigkristallmoleküle sind;
die anorganischen feinen Partikel formanisotrope feine Partikel sind und
die mindestens eine adsorptive Gruppe aus der Gruppe ausgewählt wird, bestehend aus einer COOH-Gruppe und den Salzen davon, OH-Gruppe, $SO_3H$-Gruppe, Aminogruppe, Oxim, Dioxim, Hydroxychinolin, Chelat-bildende Gruppe und Gruppen, die durch die Formel (1) und (2) dargestellt werden:

Formel (1) $-PO_3X_m$

Formel (2) $-OPO_3X_m$

worin X jeweils unabhängig voneinander ein Wasserstoffatom oder ein ein- oder zweiwertiges organisches oder anorganisches Kation darstellt, m eine ganze Zahl von 1 oder 2 ist, unter der Maßgabe, dass X ein zweiwertiges organisches oder anorganisches Kation ist, wenn m 1 ist, und dass zwei X individuell ein Wasserstoffatom oder ein einwertiges organisches oder anorganisches Kation darstellen, wenn m 2 ist.

2. Zusammensetzung gemäß Anspruch 1, worin die adsorbierten Moleküle Flüssigkristallmoleküle sind, die eine durch die folgende Formel (I) dargestellte Gruppe aufweisen:

Formel (I)

$$—Cy^1—L^1—(Cy^2\text{-}L^2)_m—Cy^3—$$

worin $L^1$ und $L^2$ jeweils eine Einfachbindung einer zweiwertigen Verknüpfungsgruppe darstellen; $Cy^1$, $Cy^2$ und $Cy^3$ jeweils eine zweiwertige cyclische Gruppe darstellen und m eine ganze Zahl von 0 bis 2 ist.

3. Zusammensetzung gemäß Anspruch 1 oder 2, worin die mindestens eine adsorptive Gruppe eine Carboxylgruppe (-COOH) oder ein Salz davon ist.

4. Zusammensetzung gemäß Anspruch 1 oder 2, worin die mindestens eine adsorptive Gruppe eine durch die folgende Formel (1) dargestellte Phosphonsäuregruppe oder ein Salz davon oder eine durch die folgende Formel (2) dargestellte Phosphorsäuremonoestergruppe oder ein Salz davon ist:

Formel (1) $-PO_3X_m$

Formel (2) $-OPO_3X_m$

worin X jeweils ein Wasserstoffatom oder ein ein- oder zweiwertiges organisches oder anorganisches Kation darstellt, m eine ganze Zahl von 1 oder 2 ist, unter der Maßgabe, dass X ein zweiwertiges organisches oder anorganisches Kation ist, wenn m 1 ist, und dass zwei X jeweils Wasserstoffatome oder einwertige organische oder anorganische Kationen darstellen, wenn m 2 ist.

5. Zusammensetzung gemäß den Ansprüchen 1 bis 4, worin die anorganischen feinen Partikel doppelbrechende feine Partikel sind.

6. Zusammensetzung gemäß mindestens einem der Ansprüche 1 bis 5, worin die anorganischen feinen Partikel feine Metalloxid-Partikel sind.

7. Zusammensetzung gemäß mindestens einem der Ansprüche 1 bis 5, worin die anorganischen feinen Partikel feine Strontiumcarbonat-Partikel sind.

8. Zusammensetzung gemäß mindestens einem der Ansprüche 1 bis 7, worin das Polymermaterial ein Polymer auf Celluloseacylat-Basis ist.

9. Zusammensetzung gemäß mindestens einem der Ansprüche 1 bis 4, worin die adsorbierten Moleküle stäbchenartige Moleküle sind.

10. Folie, hergestellt aus einer Zusammensetzung wie in mindestens einem der Ansprüche 1 bis 9 definiert.

11. Folie gemäß Anspruch 10, die ferner gestreckt wurde.

12. Verfahren zur Herstellung einer optischen Folie, umfassend die Herstellung einer Zusammensetzung, die eine Zusammensetzung in mindestens einem der Ansprüche 1 bis 9 definiert umfasst, und Herstellen einer Folie aus der Zusammensetzung

13. Mittel zur Regulierung der Retardation für Polymerfolien, das aus anorganischen feinen Partikeln mit daran adsorbierten Molekülen mit mindestens einer an den anorganischen feinen Partikeln adsorptiven Gruppe und einer Gruppe besteht, die geeignet ist, einen Kernteil einer Flüssigkristallverbindung zu bilden,
worin die adsorbierten Moleküle Flüssigkristallmoleküle sind;
die anorganischen feinen Partikel formanisotrope feine Partikel sind und
die mindestens eine adsorptive Gruppe aus der Gruppe ausgewählt wird, bestehend aus einer COOH-Gruppe und den Salzen davon, OH-Gruppe, $SO_3H$-Gruppe, Aminogruppe, Oxim, Dioxim, Hydroxychinolin, Chelat-bildende Gruppe und Gruppen, die durch die Formel (1) und (2) dargestellt werden:

Formel (1) $-PO_3X_m$

Formel (2) $-OPO_3X_m$

worin X jeweils unabhängig voneinander ein Wasserstoffatom oder ein ein- oder zweiwertiges organisches oder anorganisches Kation darstellt, m eine ganze Zahl von 1 oder 2 ist, unter der Maßgabe, dass X ein zweiwertiges organisches oder anorganisches Kation ist, wenn m 1 ist, und dass zwei X individuell ein Wasserstoffatom oder ein einwertiges organisches oder anorganisches Kation darstellen, wenn m 2 ist.

## Revendications

1. Composition comprenant, au moins :

un matériau polymère et
des particules fines inorganiques ayant, adsorbées à celles-ci, des molécules ayant au moins un groupe adsorptif à la particule fine inorganique et un groupe capable de former un coeur de cristaux liquides,
dans laquelle lesdites molécules adsorbées sont des molécules de cristaux liquides ;
lesdites particules fines inorganiques sont des particules fines anisotropiques quant à la forme; et

ledit au moins un groupe d'adsorption est sélectionné dans le groupe constitué par un groupe COOH et les sels de celui-ci, un groupe OH, un groupe $SO_3H$, un groupe amino, une oxime, une dioxime, l'hydroxyquinoline, un groupe de chélation et les groupes représentés par les formules (1) et (2) :

Formule (1) $-PO_3X_m$

Formule (2) $-OPO_3X_m$

dans lesquelles chaque X représente indépendamment un atome d'hydrogène ou un cation organique ou inorganique mono- ou divalent, m est un nombre entier valant 1 ou 2, à la condition que X soit un cation organique ou inorganique divalent si m vaut 1, et que deux X représentent individuellement un atome d'hydrogène ou un cation organique ou inorganique monovalent si m vaut 2.

2. Composition selon la revendication 1, dans laquelle lesdites molécules adsorbées sont des molécules de cristaux liquides ayant un groupe représenté par la formule (I) ci-dessous :

Formule (I)

$$-Cy^1-L^1-(Cy^2-L^2)_m-Cy^3-$$

dans laquelle $L^1$ et $L^2$ représentent respectivement une liaison simple d'un groupe de liaison divalent ; $Cy^1$, $Cy^2$ et $Cy^3$ représentent respectivement un groupe cyclique divalent, et m est un nombre entier compris entre 0 et 2.

3. Composition selon la revendication 1 ou 2, dans laquelle ledit au moins un groupe d'adsorption est un groupe carboxyle (-COOH) ou un sel de celui-ci.

4. Composition selon la revendication 1 ou 2, dans laquelle ledit au moins un groupe adsorptif est un groupe acide phosphonique représenté par la formule (1) ci-dessous ou un sel de celui-ci, ou un groupe monoester phosphorique représenté par la formule (2) ci-dessous ou un sel de celui-ci :

Formule (1) $-PO_3X_m$

Formule (2) $-OPO_3X_m$

dans lesquelles, chaque X représente un atome d'hydrogène ou un cation organique ou inorganique mono- ou divalent, m est un nombre entier valant 1 ou 2, à la condition que X soit un cation organique ou inorganique divalent si m vaut 1, et que deux X représentent respectivement des atomes d'hydrogène ou des cations organiques ou inorganiques monovalents si m vaut 2.

5. Composition selon les revendications 1 à 4, dans laquelle lesdites particules fines inorganiques sont des particules fines biréfringentes.

6. Composition selon l'une quelconque des revendications 1 à 5, dans laquelle lesdites particules fines inorganiques sont des particules fines d'oxyde de métal.

7. Composition selon l'une quelconque des revendications 1 à 5, dans laquelle lesdites particules fines inorganiques sont des particules fines de carbonate de strontium.

8. Composition selon l'une quelconque des revendications 1 à 7, dans laquelle ledit matériau polymère est un polymère à base d'acylate de cellulose.

9. Composition selon l'une quelconque des revendications 1 à 4, dans laquelle lesdites molécules adsorbées sont des

molécules en bâtonnets.

**10.** Film formé, élaboré à partir d'une composition telle que présentée selon l'une quelconque des revendications 1 à 9.

**11.** Film selon la revendication 10, qui est en outre étiré.

**12.** Procédé pour produire un film optique comprenant la préparation d'une composition comprenant une composition telle que présentée selon l'une quelconque des revendications 1 à 9 et la production d'un film élaboré à partir de la composition.

**13.** Agent de régulation de la rétention d'un film polymère constitué de particules fines inorganiques ayant, adsorbées à celles-ci, des molécules ayant au moins un groupe adsorptif à la particule fine inorganique et un groupe capable de former une partie coeur d'un composé à cristaux liquides,
dans lequel lesdites molécules adsorbées sont des molécules de cristaux liquides ;
lesdites particules fines inorganiques sont des particules fines anisotropiques quant à la forme ; et
ledit au moins un groupe adsorptif est sélectionné dans le groupe constitué par un groupe COOH et les sels de celui-ci, un groupe OH, un groupe $SO_3H$, un groupe amino, une oxime, une dioxime, l'hydroxyquinoline, un groupe de chélation et les groupes représentés par les formules (1) et (2) :

Formule (1) $-PO_3X_m$

Formule (2) $-OPO_3X_m$

dans lesquelles chaque X représente indépendamment un atome d'hydrogène ou un cation organique ou inorganique mono- ou divalent, m est un nombre entier valant 1 ou 2, à la condition que X soit un cation organique ou inorganique divalent si m vaut 1, et que deux X représentent individuellement un atome d'hydrogène ou un cation organique ou inorganique monovalent si m vaut 2.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0911656 A2
- JP 2003344655 A
- JP H995538 B
- JP S60235852 B
- JP H3199201 B
- JP H51907073 B
- JP H5194789 B
- JP H5271471 B
- JP H6107854 B
- JP H6118233 B
- JP H6148430 B
- JP H711056 B
- JP H711055 B
- JP H829619 B
- JP H8239509 B
- JP 2000204173 A
- JP H8325537 B
- JP H6235819 B
- JP 2001194522 A
- JP 2001151901 A
- JP 2000095876 A
- JP H1295877 B
- JP H10324774 B
- JP H8152514 B
- JP H10330538 B
- JP H995557 B
- JP H10235664 B
- JP H1263534 B
- JP H1121379 B
- JP H10182853 B
- JP H10278056 B
- JP H10279702 B
- JP H10323853 B
- JP H10237186 B
- JP H1160807 B
- JP H11152342 B
- JP H11292988 B
- JP H1160752 B
- JP H534858 B
- JP S62115035 B
- JP H4152125 B
- JP H4284211 B
- JP H4298310 B
- JP H1148271 B
- JP H694915 B
- JP H6118232 B
- JP H39325 A
- JP H6148429 B
- JP H926572 B
- JP 2000105316 A
- JP H10123576 B
- JP H9197397 B
- JP H10123478 B
- WO 9848320 A
- JP 3022477 B
- WO 0065384 A


### Non-patent literature cited in the description


- Ekisho Binran. A Handbook of Liquid Crystal. Maruzen Co., Ltd, 2000
- **Sumio Sakuhana.** Zoru-Geru Hou no Kagaku. Agne Shofu Publishing Inc, 1998
- Soru-Geru Hou ni yoru Hakumaku Kotingu Gijutsu. Technical Information Institute Co., Ltd, 1995
- **Tadao Sugimoto.** Shin Geru-Zoru Hou ni yoru Tanbunsan Ryushi no Gosei to Saizu Keitai Seigyo. *Materia,* 1996, vol. 35 (9), 1012-1018
- **Manabu Kiyono.** Sanka Chitan Bussei to Oyo Gijutsu. Gihodo Shuppann Co., Ltd, 1997
- **Barbe et al.** *Journal of American Ceramic Society,* 1997, vol. 80 (12), 3157-3171
- **Burnside et al.** *Chemistry of Materials,* vol. 10 (9), 2419-2425
- Flussige Kristalle in Tabellen II. VEB Deutsche Verlag, 1984, 7-16
- **Hoy et al.** *Journal of Paint Technology,* 1970, vol. 42, 76
- **Marusawa ; Uda.** Purasuchikku Zairyo Koza (17) Sen'iso-kei Jushi. Nikkan Kogyo Shimbun Co., Ltd, 1970
- *JIII Journal of Technical Disclosure,* 2001, 7-8
- **Uda et al.** *Kazuo Uda and Hideo Saito,* 1962, vol. 18 (1), 105-120
- **JIII.** *Journal of Technical Disclosure,* 15 March 2001, 7-12
- *Kobunshi,* 1992, vol. 41 (12), 884
- Kuromikku Zairyo to' Oyo. CMC Publishing Co., Ltd, 221
- Mekanokemisutori. Maruzen Co., Ltd, 21
- *Kobunshi Ronbun-Shu,* 1991, vol. 147 (10), 771

- **JIII.** *Journal of Technical Disclosure 2001-1745,* 2001, 12-16
- **JIII.** *Journal of Technical Disclosure (No. 2001-1745,* 15 March 2001, 22-25
- **JIII.** *Journal of Technical Disclosure (No. 2001-1745,* 15 March 2001, 25-30
- Polymer Handbook. John Wiley & Sons, Inc,
- Kobunshi Jikken Koza 4. Kobunshi no Bussei II. Kyoritsu Shuppann Co., Ltd, 285-294
- **JIII.** *Journal of Technical Disclosure (No. 2001-1745,* 15 March 2001, 30-32
- **JIII.** *Journal of Technical Disclosure (No. 2001-1745,* 15 March 2001, 32-45
- **Mori et al.** *Jpn. J. Appl. Phys.,* 1997, vol. 36, 143
- *Jpn. J. Appl. Phys.,* 1997, vol. 36, 1068
- **Mori et al.** *Jpn. J. Appl. Phys.,* 1999, vol. 38, 2837
- **Kume et al.** *SID 98 Digest,* 1998, 1089
- **JIII.** *Journal of Technical Disclosure (No. 2001-1745,* 15 March 2001, 54-57
- *J. Am. Chem. Soc.,* 2003, vol. 125, 10518
- *Makromol. Chem.,* 1992, vol. 193, 2915